# EUROPEAN PATENT APPLICATION

(11) **EP 4 730 156 A1**
(43) Date of publication of application: **22.04.2026**
(21) Application number: 24847757.2
(22) Date of filing: 03.06.2024
(51) Int. Cl.: G06F 16/54

(54) **VIEW DISPLAY METHOD, AND ELECTRONIC DEVICE**

(30) Priority: 03.08.2023 CN 202310980043
(71) Applicant: Huawei Technologies Co., Ltd., Shenzhen, Guangdong 518129 (CN)
(72) Inventor: YANG, Yunfan, Shenzhen, Guangdong 518129 (CN); WANG, Shoucheng, Shenzhen, Guangdong 518129 (CN); LI, Yang, Shenzhen, Guangdong 518129 (CN); ZHU, Jun, Shenzhen, Guangdong 518129 (CN)
(74) Representative: Pfenning, Meinig & Partner mbB
(86) International application number: PCT/CN2024/097130
(87) International publication number: WO 2025/025794

(57) **Abstract**

This application discloses a view display method and an electronic device. The method includes: The electronic device receives an operation performed on a first interface, where the operation is used to display a thumbnail of a target picture. The electronic device obtains a first group corresponding to the target picture, and obtains, based on the first group, a stitched image corresponding to the first group, where the stitched image includes image features of thumbnails of pictures that belong to the first group. The electronic device obtains an image feature of the thumbnail of the target picture. The electronic device displays the thumbnail of the target picture on a second interface based on the image feature of the thumbnail of the target picture. It can be learned that during thumbnail reading and decoding, the electronic device reads and decodes thumbnails in a same group once, so that resource consumption of the electronic device is effectively reduced, and a speed of reading and decoding thumbnails on the electronic device is improved. This shortens display time required for a thumbnail, and avoids a phenomenon that a white block temporarily appears in an area in which the thumbnails are to be displayed.

## Description

This application claims priority to Chinese Patent Application No. 202310980043.X, filed with the China National Intellectual Property Administration on August 3, 2023 and entitled "VIEW DISPLAY METHOD AND ELECTRONIC DEVICE", which is incorporated herein by reference in its entirety.

### TECHNICAL FIELD

Embodiments of this application relate to the field of image processing technologies, and in particular, to a view display method and an electronic device.

### BACKGROUND

With rapid development of electronic devices, the electronic devices may include a gallery or album function. Pictures in a gallery or an album on an electronic device may be classified in time dimensions such as years, months, or days. In other words, a browsing scenario of the gallery on the electronic device may be divided into year view, month view, and day view scenarios. A user may browse thumbnails of pictures of different sizes and different scales in different view scenarios, so that the user can browse, in different time dimensions, pictures shot or stored in different time periods.

A current view display method is as follows: The year view scenario is used as an example. When receiving a sliding operation performed by the user on a year view interface displayed by the electronic device, the electronic device refreshes thumbnails that are arranged in descending order of time. In a refresh process, thumbnail resource reading, picture decoding, drawing, and rendering are sequentially included, so that the thumbnails are finally displayed in a corresponding area of the electronic device.

However, there are a large quantity of pictures in the year view scenario, and thumbnails are separately refreshed and displayed in an entire view display process, resulting in an excessively large quantity of resource-intensive operations on the electronic device, such as picture resource reading and picture decoding. Consequently, display time required for a picture is prolonged, and a white block temporarily appears in an area in which the pictures are to be displayed. In particular, a large quantity of white blocks appear in a process of quickly sliding through the year view interface by the user, leading to a poor user experience.

### SUMMARY

A view display method and an electronic device provided in embodiments of this application shortens display time required for a thumbnail of a picture, and avoids a phenomenon that a white block temporarily appears in an area in which the thumbnail of the picture is to be displayed.

To achieve the foregoing objective, the following technical solutions are used in embodiments of this application.

According to a first aspect, this application provides a view display method. The method may be performed by an electronic device, or may be performed by a component (for example, a chip, a chip system, or a processor) in the electronic device. The following uses an example in which the method is performed by the electronic device for description. The method may include: receiving a first operation performed on a first interface, where the first operation is used to display a thumbnail of a first target picture; obtaining a first group corresponding to the first target picture; obtaining, based on the first group, a first stitched image corresponding to the first group, where the first stitched image includes image features of thumbnails of pictures that belong to the first group; obtaining an image feature of the thumbnail of the first target picture; and displaying the thumbnail of the first target picture on a second interface based on the image feature of the thumbnail of the first target picture.

In an example, the first interface may be understood as a picture display interface of a gallery application. The interface may be a display interface of a first view, and the first view may include any one of a day view, a month view, and a year view. Certainly, the first view may be another view, for example, a half-month view or a half-year view. This is not specifically limited in this application.

In an example, the first group may be generated in advance. The first group is obtained by grouping a plurality of pictures in a first preset sequence and a first quantity. The first preset sequence may be understood as a capture time order, an arrangement order, or a location order of the plurality of pictures. The first quantity may be a quantity of thumbnails determined based on a display size of a thumbnail of the first view.

In an example, the first stitched image may be understood as a stitched image of image features of thumbnails of all first group of pictures. In other words, the thumbnails of all first group of pictures are stitched into the stitched image based on a sequence and sizes.

In this application, during thumbnail reading and decoding, the electronic device reads and decodes thumbnails in a same group once without a need to read and decode the thumbnails separately, so that resource consumption of the electronic device is effectively reduced, and a speed of reading and decoding thumbnails on the electronic device is improved. This shortens display time required for a thumbnail, and avoids a phenomenon that a white block temporarily appears in an area in which the thumbnails are to be displayed.

In a design solution, displaying the thumbnail of the first target picture on the second interface is specifically: obtaining a first location that is of the second interface and that is used to display the thumbnail of the first target picture; and displaying the thumbnail of the first target picture based on the first location and the image feature of the thumbnail of the first target picture.

In an example, the first location may be understood as a control on the first interface, and the control is configured to display a picture or a thumbnail of the picture.

In some design solutions, before receiving the first operation performed on the first interface, the method further includes: grouping a first quantity of pictures to obtain the first group of pictures; obtaining the thumbnails of the first group of pictures; and stitching the thumbnails of the first group of pictures to obtain the first stitched image. The first quantity may be a quantity of thumbnails determined based on a display size of a thumbnail of the first view.

For example, the year view is used as an example. A corresponding area of each thumbnail in a stitched image is [64*pos, 0, 64*pos+64, 64], where the area corresponds to an area [left, upper, right, lower], and the area corresponds to an image feature of the thumbnail. pos indicates a sequence of thumbnails (also a sequence of first group of pictures), and each thumbnail has a size of 64*64 pixels.

In a design solution, grouping the first quantity of pictures is specifically: grouping the first quantity of pictures based on a first view, where the first view includes a day view, a month view, or a year view.

In a design solution, the first operation is used to display the thumbnail of the first target picture in a manner of the first view.

In a design solution, stitching the thumbnails of the first group of pictures to obtain the first stitched image is specifically: stitching the thumbnails of the first group of pictures into the first stitched image in a chronological order of the first group of pictures.

In some design solutions, before grouping the first quantity of pictures to obtain the first group of pictures, the method further includes: receiving a specified operation, where the specified operation includes at least one of the following: a screen-off operation, a charging operation, a picture import operation, an operation of starting a gallery application, a trigger operation of displaying pictures in the gallery application in a manner of the first view for the first time, and a picture synchronization operation.

In a design solution, grouping the first quantity of pictures to obtain the first group of pictures is specifically: grouping the first quantity of pictures based on a preset periodicity, to obtain the first group of pictures.

In some design solutions, the method further includes: updating the first group and the first stitched image corresponding to the first group, when it is detected that a quantity of pictures changes.

In a design solution, updating the first group when it is detected that the quantity of pictures changes is specifically: updating the first group when it is detected that a quantity of added pictures reaches a first threshold; or updating the first group when it is detected that a quantity of deleted pictures reaches a second threshold. In this application, adjacent thumbnails displayed on an interface of the electronic device are grouped together as much as possible based on a change request of pictures in the gallery application, to flexibly adjust a stitched image. Subsequently, when the electronic device refreshes and displays thumbnails, the electronic device may find a corresponding thumbnail from the updated stitched image, resulting in high accuracy. This improves user experience.

In some design solutions, before obtaining, based on the first group, the first stitched image corresponding to the first group, the method further includes: determining that the electronic device stores the first stitched image corresponding to the first group.

In a design solution, obtaining, based on the first group, the first stitched image corresponding to the first group is specifically: determining, based on the first group to which the first target picture belongs, that the first stitched image corresponding to the first group is stored in a memory; and obtaining the first stitched image corresponding to the first group.

In a design solution, obtaining, based on the first group, the first stitched image corresponding to the first group is specifically: determining whether a second target picture in the first group sends a request for reading the first stitched image corresponding to the first group, where the second target picture is any picture in the first group; and if the second target picture sends the request for reading the first stitched image corresponding to the first group, obtaining the first stitched image corresponding to the first group stored in a memory; or if the second target picture does not send the request for reading the first stitched image corresponding to the first group, reading the first stitched image based on a group identifier of the first group, and storing the first stitched image in a memory.

In a design solution, obtaining, based on the first group, the first stitched image corresponding to the first group is specifically: when the first stitched image corresponding to the first group is not stored in a memory, determining whether the first stitched image is being processed; and if the first stitched image is being processed, waiting until the first stitched image is processed completely and obtaining the first stitched image; or if the first stitched image is not being processed, reading the first stitched image based on a group identifier of the first group, and storing the first stitched image in the memory.

In a design solution, obtaining, based on the first group, the first stitched image corresponding to the first group is specifically: based on a group identifier of the first group to which the first target picture belongs and a ranking of the first target picture in the group, obtaining, from the first stitched image corresponding to the group identifier, the image feature of the thumbnail corresponding to the first target picture.

In a design solution, displaying the thumbnail of the first target picture based on the first location and the image feature of the thumbnail of the first target picture is specifically: rendering the image feature of the thumbnail of the first target picture at the first location; displaying the thumbnail of the first target picture at the first location; and displaying a second stitched image in a first area of the first interface when the quantity of pictures does not change, where the second stitched image and the first stitched image are the same; displaying a third stitched image in a first area of the first interface when the quantity of pictures increases, where the third stitched image includes image features of some or all thumbnails in the first stitched image and image features of some or all thumbnails in a fourth stitched image, and the fourth stitched image is obtained by stitching thumbnails of the added pictures; or displaying a fifth stitched image in a first area of the first interface when the quantity of pictures decreases, where the fifth stitched image is distinct from the first stitched image.

In a design solution, the first interface is an interface of the gallery application or a file management application.

According to a second aspect, this application provides an electronic device, where the electronic device includes a receiving module, an obtaining module, and a display module. The receiving module is configured to receive a first operation performed on a first interface, where the first operation is used to display a thumbnail of a first target picture. The obtaining module is configured to obtain a first group corresponding to the first target picture. The obtaining module is configured to obtain, based on the first group, a first stitched image corresponding to the first group, where the first stitched image includes image features of thumbnails of pictures that belong to the first group. The obtaining module is configured to obtain an image feature of the thumbnail of the first target picture. The display module is configured to display the thumbnail of the first target picture on a second interface based on the image feature of the thumbnail of the first target picture.

In an example, the first interface may be understood as a picture display interface of a gallery application. The interface may be a display interface of a first view, and the first view may include any one of a day view, a month view, and a year view. Certainly, the first view may be another view, for example, a half-month view or a half-year view. This is not specifically limited in this application.

In an example, the first group may be generated in advance. The first group is obtained by grouping a plurality of pictures in a first preset sequence and a first quantity. The first preset sequence may be understood as a capture time order, an arrangement order, or a location order of the plurality of pictures. The first quantity may be a quantity of thumbnails determined based on a display size of a thumbnail of the first view.

In an example, the first stitched image may be understood as a stitched image of image features of thumbnails of all first group of pictures. In other words, the thumbnails of all first group of pictures are stitched into the stitched image based on a sequence and sizes.

In this application, during thumbnail reading and decoding, the electronic device reads and decodes thumbnails in a same group once without a need to read and decode the thumbnails separately, so that resource consumption of the electronic device is effectively reduced, and a speed of reading and decoding thumbnails on the electronic device is improved. This shortens display time required for a thumbnail, and avoids a phenomenon that a white block temporarily appears in an area in which the thumbnails are to be displayed.

In a design solution, the obtaining module is configured to obtain a first location that is of the second interface and that is used to display the thumbnail of the first target picture. The display module is configured to display the thumbnail of the first target picture based on the first location and the image feature of the thumbnail of the first target picture.

In a design solution, the electronic device further includes a grouping module and a stitching module. The grouping module is configured to group a first quantity of pictures to obtain the first group of pictures. The obtaining module is configured to obtain the thumbnails of the first group of pictures. The stitching module is configured to stitch the thumbnails of the first group of pictures to obtain the first stitched image.

In a design solution, the grouping module is configured to group the first quantity of pictures based on a first view, where the first view includes a day view, a month view, or a year view.

In a design solution, the first operation is used to display the thumbnail of the first target picture in a manner of the first view.

In a design solution, the stitching module is configured to stitch the thumbnails of the first group of pictures into the first stitched image in a chronological order of the first group of pictures.

In a design solution, the receiving module is configured to receive a specified operation, where the specified operation includes at least one of the following: a screen-off operation, a charging operation, a picture import operation, an operation of starting a gallery application, a trigger operation of displaying pictures in the gallery application in a manner of the first view for the first time, and a picture synchronization operation.

In a design solution, the grouping module is configured to group the first quantity of pictures based on a preset periodicity, to obtain the first group of pictures.

In a design solution, the electronic device further includes an updating module. The updating module is configured to update the first group and the first stitched image corresponding to the first group, when it is detected that a quantity of pictures changes.

In a design solution, the updating module is configured to: update the first group when it is detected that a quantity of added pictures reaches a first threshold; or update the first group when it is detected that a quantity of deleted pictures reaches a second threshold.

In a design solution, the electronic device further includes a determining module. The determining module is configured to determine that the electronic device stores the first stitched image corresponding to the first group. In this application, adjacent thumbnails displayed on an interface of the electronic device are grouped together as much as possible based on a change request of pictures in the gallery application, to flexibly adjust a stitched image. Subsequently, when the electronic device refreshes and displays thumbnails, the electronic device may find a corresponding thumbnail from the updated stitched image, resulting in high accuracy. This improves user experience.

In a design solution, the obtaining module is configured to: determine, based on the first group to which the first target picture belongs, that the first stitched image corresponding to the first group is stored in a memory; and obtain the first stitched image corresponding to the first group.

In a design solution, the obtaining module is configured to: determine whether a second target picture in the first group sends a request for reading the first stitched image corresponding to the first group, where the second target picture is any picture in the first group; and if the second target picture sends the request for reading the first stitched image corresponding to the first group, obtain the first stitched image corresponding to the first group stored in a memory; or if the second target picture does not send the request for reading the first stitched image corresponding to the first group, read the first stitched image based on a group identifier of the first group, and store the first stitched image in a memory.

In a design solution, the obtaining module is configured to: when the first stitched image corresponding to the first group is not stored in a memory, determine whether the first stitched image is being processed; and if the first stitched image is being processed, wait until the first stitched image is processed completely and obtain the first stitched image; or if the first stitched image is not being processed, read the first stitched image based on a group identifier of the first group, and store the first stitched image in the memory.

In a design solution, the obtaining module is configured to: based on a group identifier of the first group to which the first target picture belongs and a ranking of the first target picture in the group, obtain, from the first stitched image corresponding to the group identifier, the image feature of the thumbnail corresponding to the first target picture.

In a design solution, the display module is configured to: render the image feature of the thumbnail of the first target picture at the first location; display the thumbnail of the first target picture at the first location; and display a second stitched image in a first area of the first interface when the quantity of pictures does not change, where the second stitched image and the first stitched image are the same; display a third stitched image in a first area of the first interface when the quantity of pictures increases, where the third stitched image includes image features of some or all thumbnails in the first stitched image and image features of some or all thumbnails in a fourth stitched image, and the fourth stitched image is obtained by stitching thumbnails of the added pictures; or display a fifth stitched image in a first area of the first interface when the quantity of pictures decreases, where the fifth stitched image is distinct from the first stitched image.

In a design solution, the first interface is an interface of the gallery application or a file management application.

According to a third aspect, this application provides an electronic device. The electronic device includes one or more processors and a storage. The storage stores code, and when the code is executed by the processor, the electronic device is caused to perform the method according to the first aspect.

According to a fourth aspect, this application provides a computer-readable storage medium, including computer instructions. When the computer instructions are run on an electronic device, the electronic device is caused to perform the method according to the first aspect.

For specific implementations and corresponding technical effects of the second aspect to the fourth aspect, refer to specific implementations and technical effect of the first aspect.

### BRIEF DESCRIPTION OF DRAWINGS

FIG. 1 is a diagram of an interface of an electronic device according to an embodiment of this application;
FIG. 2 is a diagram of another interface of an electronic device according to an embodiment of this application;
FIG. 3 is a diagram of another interface of an electronic device according to an embodiment of this application;
FIG. 4 is a diagram of another interface of an electronic device according to an embodiment of this application;
FIG. 5 is a diagram of a structure of an electronic device according to an embodiment of this application;
FIG. 6 is a schematic flowchart of a view display method according to an embodiment of this application;
FIG. 7-1 is a schematic flowchart of a view display method according to an embodiment of this application;
FIG. 7-2 is a schematic flowchart of a method for updating a stitched image according to an embodiment of this application;
FIG. 7-3A to FIG. 7-3D are diagrams of updating a stitched image according to an embodiment of this application;
FIG. 7-4 is a schematic flowchart of a method for updating a stitched image according to an embodiment of this application;
FIG. 7-5A to FIG. 7-5D are diagrams of updating a stitched image according to an embodiment of this application;
FIG. 7-6A to FIG. 7-6C are diagrams of updating a stitched image according to an embodiment of this application;
FIG. 8-1 is a schematic flowchart of a view display method according to an embodiment of this application;
FIG. 8-2A and FIG. 8-2B are a schematic flowchart of a view display method according to an embodiment of this application;
FIG. 8-3A and FIG. 8-3B are a schematic flowchart of a view display method according to an embodiment of this application;
FIG. 9A and FIG. 9B are diagrams of a correspondence between a gallery interface and a stitched image in an application scenario of a view display method according to an embodiment of this application;
FIG. 10A and FIG. 10B are diagrams of a correspondence between a gallery interface and a stitched image in an application scenario of a view display method according to an embodiment of this application;
FIG. 11A and FIG. 11B are diagrams of a correspondence between a gallery interface and a stitched image in an application scenario of a view display method according to an embodiment of this application;
FIG. 12A and FIG. 12B are diagrams of a correspondence between a gallery interface and a stitched image in an application scenario of a view display method according to an embodiment of this application; and
FIG. 13A to FIG. 13C are diagrams of a correspondence between a gallery interface and a stitched image in an application scenario of a view display method according to an embodiment of this application.

### DESCRIPTION OF EMBODIMENTS

An electronic device may include a gallery or album function. Pictures in a gallery or an album on the electronic device may be classified in time dimensions such as years, months, or days. In other words, a browsing scenario of the gallery on the electronic device may be divided into year view, month view, and day view scenarios. A user may browse thumbnails of pictures of different sizes and different scales in different view scenarios, so that the user can browse, in different time dimensions, pictures shot or stored in different time periods.

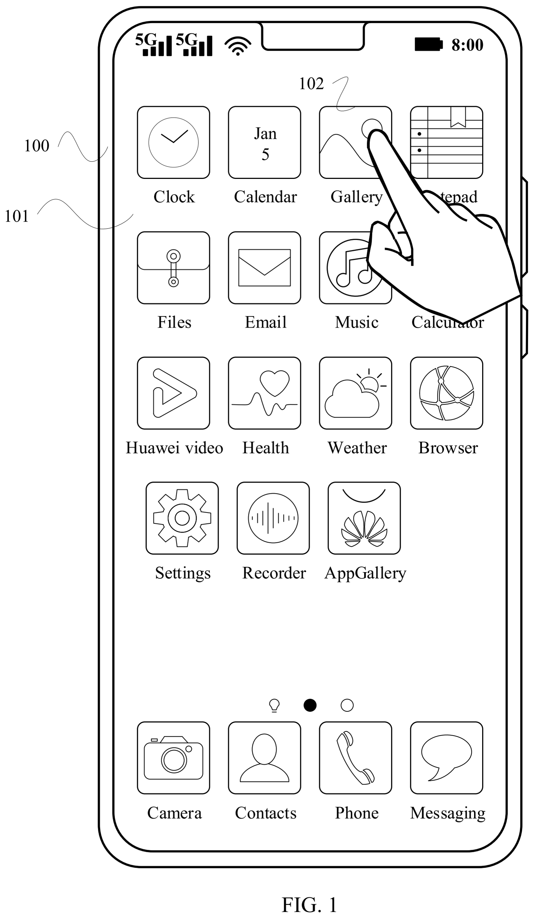

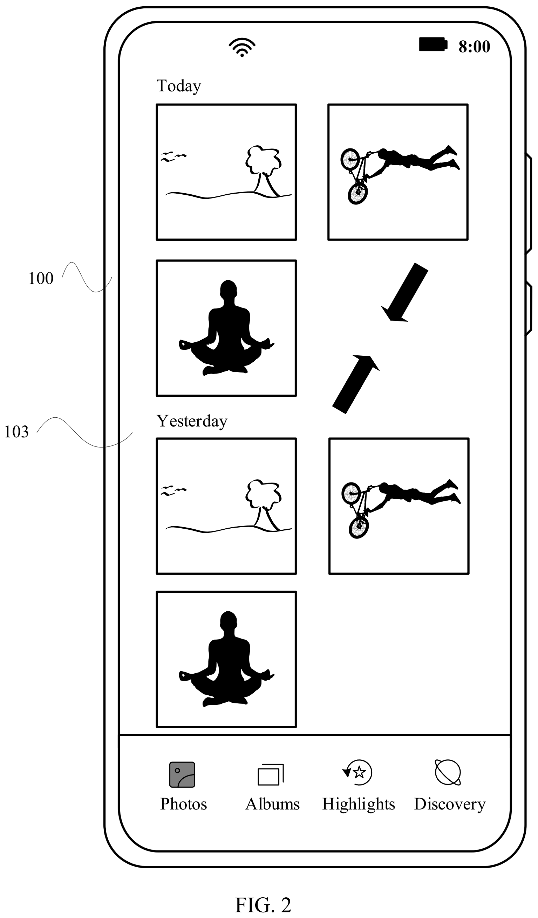

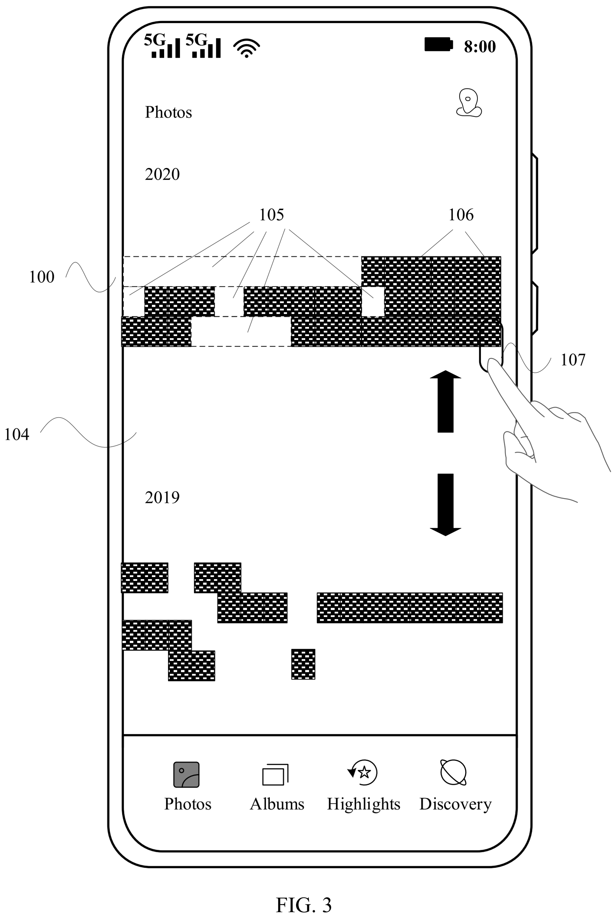

Specifically, FIG. 1 is a diagram of an interface of an electronic device. As shown in FIG. 1, the electronic device 100 displays an interface 101 shown in FIG. 1, and the interface 101 includes an icon 102 of a gallery application. When a user taps the icon 102, the display interface of the electronic device 100 jumps to an interface 103 shown in FIG. 2, and the interface 103 includes a plurality of pictures. These pictures are classified by date in time dimension. When two fingers of the user slide along arrows on the interface 103, in response to the user operation, the electronic device 100 reads thumbnails of the pictures in a time sequence, and decodes the thumbnails to obtain image features of the thumbnails. Then, after the electronic device 100 performs drawing and rendering on the image features of the thumbnails, the electronic device 100 displays an interface 104 shown in FIG. 3. A blank area 105 and some thumbnails 106 are displayed in a display area of a year 2020 on the interface 104. Similarly, when the user presses a control 107 shown in FIG. 3 to slide along the arrow " 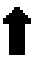 "or the arrow " 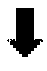 ", in response to the user operation, the electronic device 100 repeatedly performs the foregoing operations such as reading, decoding, drawing, and rendering on each of the thumbnails 106. In this case, the blank area 105 may still be displayed on the interface of the electronic device 100. As shown in FIG. 3, the blank area is displayed in a display area of a year 2019.

It can be learned that there are a large quantity of thumbnails in a year view scenario and thumbnails are separately refreshed and displayed in an entire view display process, resulting in an excessively large quantity of resource-intensive operations on the electronic device, such as thumbnail resource reading and thumbnail decoding. Consequently, display time required for a thumbnail is prolonged, and a white block temporarily appears in an area in which the thumbnails are to be displayed. In particular, a large quantity of white blocks appear in a process of quickly sliding through a year view interface by the user, leading to a poor user experience.

To resolve the foregoing problem, an embodiment of this application provides a view display method. The method is applied to an electronic device. The electronic device determines, based on display sizes of thumbnails in a first view, a first quantity of the thumbnails displayed in the first view. The electronic device groups a first quantity of pictures on the electronic device in descending order of time, to obtain a first group. The electronic device determines thumbnails of first group of pictures in the first view. The electronic device stitches all thumbnails in the first group into a stitched image. Group information of the first group may include an identifier of the first group, and a location and an identifier of each picture in the first group in the group. The stitched image includes the group identifier and image features of the thumbnails in the first group in the stitched image. A first operation performed by the user on a first interface of a gallery application of the electronic device is received, where the first operation is used to trigger displaying of the first view on the first interface. In response to the first operation, the electronic device determines a first display area corresponding to the first view, where the first display area includes a first location used to display a thumbnail of a target picture. The electronic device reads, based on the group information, the first group corresponding to the target picture and the stitched image of the first group. The electronic device decodes the stitched image, and finds, on the stitched image, an image feature of the target thumbnail corresponding to the target picture. The electronic device displays the target thumbnail in the first location of the first display area based on the image feature of the target thumbnail. It can be learned that this application is different from an existing view display method as follows: During thumbnail reading and decoding, the electronic device reads and decodes thumbnails in a same group once without a need to read and decode the thumbnails separately, so that resource consumption of the electronic device is effectively reduced, and a speed of reading and decoding thumbnails on the electronic device is improved. This shortens display time required for a thumbnail, and avoids a phenomenon that a white block temporarily appears in an area in which the thumbnails are to be displayed.

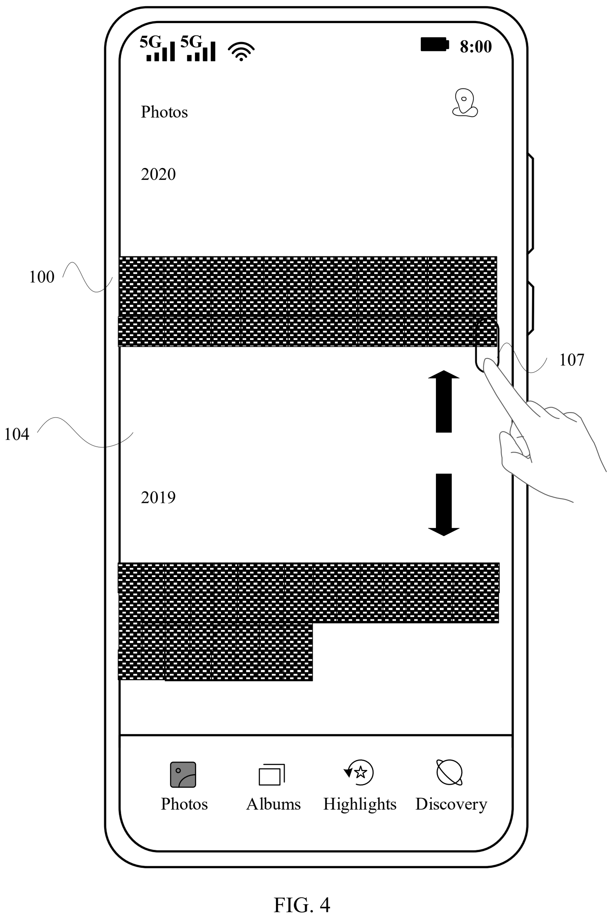

For example, the foregoing example is still used. When the two fingers of the user slide along the arrows on the interface 103 shown in FIG. 2, in response to the user operation, the electronic device 100 reads the stitched image corresponding to the first group to which the target picture belongs, and decodes image features of thumbnails in the stitched image, where the operation is used to trigger displaying of a year view on the interface 104. Then, the electronic device 100 performs drawing and rendering on the image feature of the thumbnail of the target picture. Usually, drawing and rendering take some time. After the drawing and rendering are completed, the electronic device 100 displays the interface 104 shown in FIG. 4, and displays thumbnails of all pictures in the year view on the interface 104. Because the electronic device 100 reads and decodes thumbnails in a same group once, a speed of reading and decoding thumbnails on the electronic device is improved, so that display time required for a thumbnail is shortened, and all thumbnails on the interface 104 are displayed, without any white block.

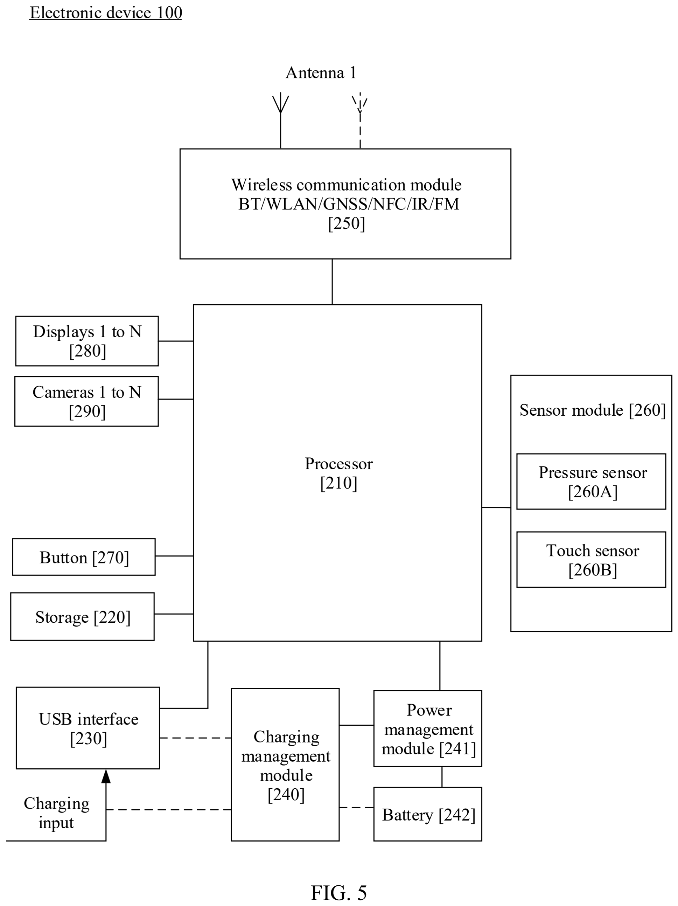

FIG. 5 is a block diagram of a structure of the electronic device 100.

As shown in FIG. 5, the electronic device 100 may include a processor 210, a storage 220, a universal serial bus (universal serial bus, USB) interface 230, a charging management module 240, a power management module 241, a battery 242, an antenna 1, a wireless communication module 250, a sensor module 260, a button 270, a display 280, a camera 290, and the like. The sensor module 260 may include a pressure sensor 260A, a touch sensor 260B, and the like.

It may be understood that the structure shown in embodiments of this application does not constitute a specific limitation on the electronic device. In some other embodiments of this application, the electronic device may include more or fewer components than those shown in the figure, or a combination of some components, or splits from some components, or a different component layout. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A storage may be further disposed in the processor 210, and is configured to store instructions and data. In some embodiments, the storage in the processor 210 is a cache. The storage may store instructions or data just used or cyclically used by the processor 210. If the processor 210 needs to use the instructions or the data again, the processor may directly invoke the instructions or the data from the storage. This avoids repeated access, reduces waiting time of the processor 210, and therefore improves system efficiency.

The charging management module 240 is configured to receive a charging input from a charger. The charger may be a wireless charger or a wired charger. In some embodiments in which the charger is a wired charger, the charging management module 240 may receive a charging input from the wired charger through the USB interface 230. In some embodiments in which the charger is a wireless charger, the charging management module 240 may receive a wireless charging input through a wireless charging coil of the electronic device. The charging management module 240 supplies power to the electronic device through the power management module 241 while charging the battery 242.

The power management module 241 is configured to connect to the battery 242, the charging management module 240, and the processor 210. The power management module 241 receives an input from the battery 242 and/or the charging management module 240, and supplies power to the processor 210, the storage 220, the display 280, the wireless communication module 250, and the like. The power management module 241 may be further configured to monitor parameters such as a battery capacity, a battery cycle count, and a battery health status (electric leakage or impedance). In some other embodiments, the power management module 241 may alternatively be disposed in the processor 210. In some other embodiments, the power management module 241 and the charging management module 240 may alternatively be disposed in a same component.

A wireless communication function of the electronic device may be implemented through the antenna 1, the wireless communication module 250, the modem processor, the baseband processor, and the like.

The antenna 1 is configured to: transmit and receive electromagnetic wave signals. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The wireless communication module 250 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 250 may be one or more components integrating at least one communication processing module. The wireless communication module 250 receives an electromagnetic wave through the antenna 1, performs frequency modulation and filtering processing on the electromagnetic wave signal, and sends a processed signal to the processor 210. The wireless communication module 250 may further receive a to-be-sent signal from the processor 210, perform frequency modulation and amplification on the signal, and convert the signal into an electromagnetic wave for radiation through the antenna 1.

The electronic device implements a display function through the GPU, the display 280, the application processor, and the like. The GPU is a microprocessor for image processing, and is connected to the display 280 and the application processor. The GPU is configured to: perform mathematical and geometric computation, and render an image. The processor 210 may include one or more GPUs that execute program instructions to generate or change displayed information.

The display 280 is configured to display an image, a video, and the like. The display 280 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 280, where N is a positive integer greater than 1.

The electronic device may implement a photographing function by using the ISP, the video codec, the GPU, the display 280, the application processor, and the like.

The ISP is configured to process data fed back by the camera 290. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 290.

The camera 290 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a format like standard RGB (RGB indicates red, green, and blue) or YUV ("Y" indicates luminance (Luminance or Luma), namely, a grayscale value, and "U" and "V" indicate chrominance (Chrominance or Chroma)). In some embodiments, the electronic device may include one or N cameras 290, where N is a positive integer greater than 1.

The digital signal processor is configured to process a digital signal, and may process another digital signal in addition to the digital image signal. For example, when the electronic device selects a frequency, the digital signal processor is configured to perform Fourier transformation or the like on frequency energy.

The video codec is configured to compress or decompress a digital video. The electronic device may support one or more types of video codecs. In this way, the electronic device may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transmission mode between human brain neurons, and may further continuously perform self-learning. Applications such as intelligent cognition of the electronic device may be implemented through the NPU, for example, image recognition, facial recognition, speech recognition, and text understanding.

The storage 220 may be configured to store computer-executable program code. The executable program code includes instructions. The storage 220 may include a program storage area and a data storage area. The program storage area may store an operating system, an application necessary to at least one function (for example, a voice playing function or an image playing function), and the like. The data storage area may store data (such as audio data and an address book) and the like that are created during use of the electronic device. In addition, the storage 220 may include a high-speed random access memory, or may include a nonvolatile memory, for example, at least one magnetic disk storage device, a flash memory, or a universal flash storage (universal flash storage, UFS). The processor 210 runs the instructions stored in the storage 220 and/or the instructions stored in the storage disposed in the processor, to perform various function applications and data processing of the electronic device.

The pressure sensor 260A is configured to sense a pressure signal, and can convert the pressure signal into an electrical signal. In some embodiments, the pressure sensor 260A may be disposed on the display 280. There are a plurality of types of pressure sensors 260A, such as a resistive pressure sensor, an inductive pressure sensor, and a capacitive pressure sensor. The capacitive pressure sensor may include at least two parallel plates made of conductive materials. When a force is applied to the pressure sensor 260A, capacitance between electrodes changes. The electronic device determines pressure intensity based on a change in the capacitance. When a touch operation is performed on the display 280, the electronic device detects intensity of the touch operation through the pressure sensor 260A. The electronic device may also calculate a touch location based on a detection signal of the pressure sensor 260A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

The touch sensor 260B is also referred to as a "touch component". The touch sensor 260B may be disposed on the display 280, and the touch sensor 260B and the display 280 constitute a touchscreen, which is also referred to as a "touch screen". The touch sensor 260B is configured to detect a touch operation performed on or near the touch sensor 260B. The touch sensor may transfer the detected touch operation to the application processor to determine a type of a touch event. A visual output related to the touch operation may be provided on the display 280. In some other embodiments, the touch sensor 260B may alternatively be disposed on a surface of the electronic device at a location different from that of the display 280.

The button 270 includes a power button, a volume button, and the like. The button 270 may be a mechanical button, or may be a touch button. The electronic device may receive a button input, and generate a button signal input related to a user setting and function control of the electronic device.

Certainly, the electronic device may further include another functional unit. This is not limited in embodiments of this application.

The electronic device 100 is an electronic device having an image display function. For example, the electronic device 100 may be a mobile phone (mobile phone), a tablet computer (Pad), a laptop, a notebook computer, an ultra-mobile personal computer (ultra-mobile personal computer, UMPC), a handheld computer, a netbook, a personal digital assistant (personal digital assistant, PDA), a wearable electronic device, a virtual reality (virtual reality, VR) device, or the like.

An embodiment of this application provides a view display method. The method is applied to the electronic device shown in FIG. 5. The method may be described in detail in the following phases:

### First phase: preparation phase.

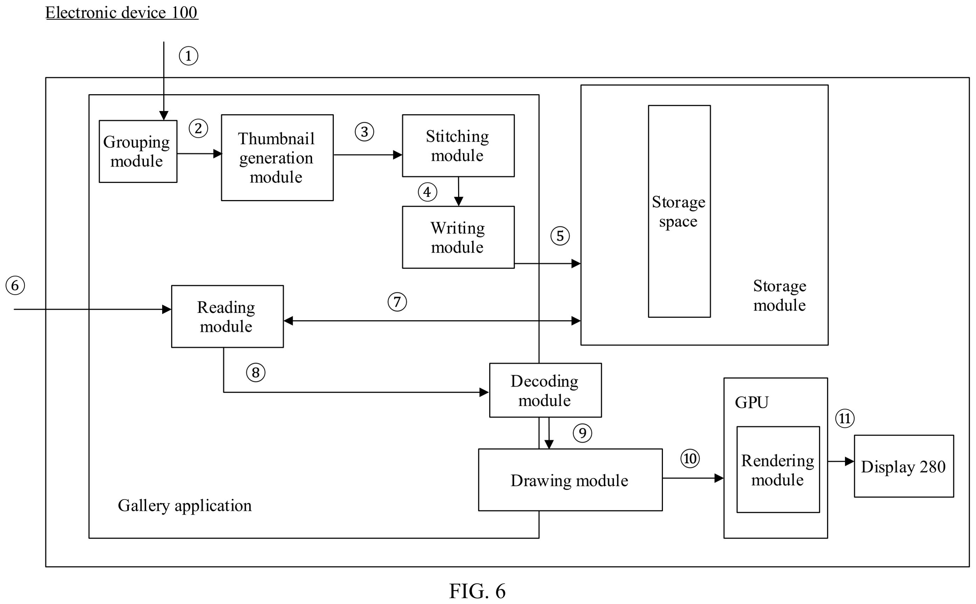

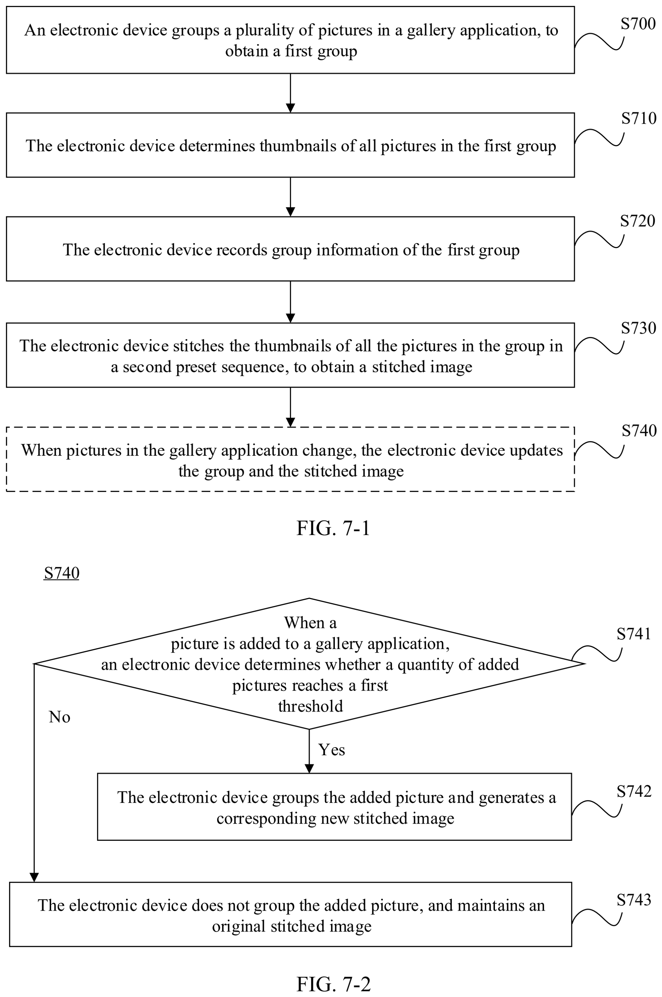

FIG. 6 and FIG. 7-1 are schematic flowcharts of a view display method according to an embodiment of this application. As shown in FIG. 6 and FIG. 7-1, the method may include S700, S710, S720, S730, and S740 (some steps are optional). For details of S700, S710, S720, S730, and S740, refer to descriptions in the following embodiments. Details may be as follows.

S700: The electronic device groups a plurality of pictures in a gallery application, to obtain a first group.

After the camera of the electronic device captures the plurality of pictures, information about these pictures is stored in memory space of the electronic device. In addition, these pictures may be displayed on an interface of the gallery application based on a first view. The first view may include a day view, a month view, or a year view. For example, in a day view scenario, these pictures may be displayed on the interface 103 shown in FIG. 2 in the order of capture time. However, in a month view scenario or a year view scenario, because there are a large quantity of pictures that need to be displayed on the interface, thumbnails of these pictures need to be displayed on the interface of the gallery application. Therefore, the electronic device needs to group the plurality of pictures in the gallery application based on different view scenarios. Specifically, the grouping manner is as follows:
In a specific implementation, the electronic device determines, based on display sizes of the thumbnails in the first view, a first quantity of the thumbnails displayed in the first view. The electronic device groups a first quantity of pictures on the electronic device in a first preset sequence, to obtain the first group.

A thumbnail may be understood as a cropped or reduced version of a picture. The thumbnails in the first view may be understood as cropped or reduced versions of the pictures in the first view. In other words, thumbnails of a same picture are different in different view scenarios. For example, a size of a picture may be 4096*3072 pixels. In the month view scenario, a size of a thumbnail of the picture may be 128*128 pixels. In the year view scenario, a size of a thumbnail of the picture may be 64*64 pixels.

In an example, the electronic device may display different quantities of thumbnails in different view scenarios. For example, in the month view scenario, the electronic device may display 80 thumbnails, each with a size of 128*128 pixels, and correspondingly a quantity of pictures is also 80. In the year view scenario, the electronic device may display 100 thumbnails, each with a size of 64*64 pixels, and correspondingly a quantity of pictures is also 100. In this application, an example in which the first view is the year view and the first quantity is 100 is used for description.

The first preset sequence may include a capture time order, a location order, an arrangement order, and the like. In this application, an example in which the first preset sequence is a descending order of time is used for detailed description.

During specific implementation, a specific set value of the first quantity may be selected based on an actual requirement. For example, in the month view scenario, the electronic device may select, as the first group, 80 thumbnails from a plurality of thumbnails each with a size of 128*128 pixels arranged in the descending order of time. In the year view scenario, the electronic device may select, as the first group, 100 thumbnails from a plurality of thumbnails each with a size of 64*64 pixels arranged in the descending order of time.

In a specific implementation, as shown in FIG. 6, S700 may be specifically: ①. The electronic device receives an operation on the electronic device, where the operation may include a screen-off operation triggered by the user, or an operation triggered by the user for browsing the thumbnails on the interface of the gallery application in the first view for the first time. ②. When the electronic device receives the operation on the electronic device, a grouping module in the gallery application of the electronic device may first group the plurality of pictures in the first preset sequence and the first quantity, to obtain the first group.

S710: The electronic device determines thumbnails of all pictures in the first group.

In some examples, timing for generating a thumbnail may include the following scenarios: Scenario 1, in a process of capturing a picture by the camera, a thumbnail of the picture may be generated, and information about the picture and the thumbnail of the picture is stored in the storage space. Scenario 2: In the foreground, a thumbnail of a picture may be triggered to be generated based on a user operation. For example, when the user triggers a screen-off operation or the user performs a trigger operation of browsing the thumbnails on the interface of the gallery application in the first view for the first time, the electronic device determines the thumbnails of all the pictures in the first group. Scenario 3: In the background, the electronic device automatically generates a thumbnail of a picture. For example, when the electronic device is being charged, or the electronic device automatically performs a thumbnail generation operation, or the electronic device periodically performs a thumbnail generation operation, or a cloud synchronizes a picture to the electronic device completely, the electronic device determines the thumbnails of all the pictures in the first group.

That the electronic device determines a thumbnail of a picture may be specifically implemented as follows: In a specific implementation, the electronic device may scale and/or crop a picture with a size of 4096*3072 pixels, to obtain a thumbnail with a size of 64*64 pixels. In another specific implementation, the electronic device scales and/or crops a picture with a size of 4096*3072 pixels, to obtain a thumbnail with a size of 128*128 pixels. Further, to obtain a thumbnail with a smaller size, the electronic device may crop an existing thumbnail to obtain a smaller thumbnail. For example, the electronic device may scale or crop the thumbnail with the size of 128*128 pixels, to obtain the thumbnail with the size of 64*64 pixels. In this way, existing resources can be fully utilized and efficiency can be effectively improved.

In a specific implementation, as shown in FIG. 6, S710 may be specifically: ③. A thumbnail generation module in the gallery application of the electronic device may generate the corresponding thumbnails of all the pictures in the first group. For example, the electronic device may scale and/or crop the picture with the size of 4096*3072 pixels, to obtain the thumbnail with the size of 64*64 pixels.

S720: The electronic device records group information of the first group.

In some examples, after the electronic device groups the plurality of pictures, the electronic device obtains the group information. The group information may include an identifier of each group, picture capture time of each group, the first quantity, and an identifier of each picture. Certainly, the group information may further include an identifier of a view scenario and an identifier of a thumbnail corresponding to each picture. For example, if the view scenario is the month view scenario, an identifier of the month view scenario may be a month thumbnail group key, and correspondingly an identifier of a thumbnail corresponding to a target picture may be a month thumbnail group key_moon_thumbnail 1. For example, if the view scenario is the year view scenario, an identifier of the year view scenario may be a year thumbnail group key, and correspondingly an identifier of a thumbnail corresponding to a target picture may be a year thumbnail group key_year_thumbnail 1.

Then, the electronic device records the group information. For example, the group information stored in the local storage space of the electronic device may be recorded in Table 1. For details, refer to Table 1.

**Table 1**

| Group_key (string) | Year (int) | Thumbs_count (int) |
|---|---|---|
| "Group 1" | 2019 | 100 |
| ... | ... | ... |

In Table 1, a Group_key field indicates a group identifier, a Year field indicates time, and a Thumbs_count field indicates the first quantity.

Certainly, after the electronic device obtains the group information, the electronic device may further obtain a picture corresponding to the target picture. Information about the picture may include an identifier of the target picture, a size of the target picture, capture time of the target picture, an identifier of a group to which the target picture belongs, an identifier of a thumbnail of the target picture, and a ranking of the target picture in the group. Then, the electronic device records the picture information. For example, the picture information stored in the local storage space of the electronic device may be recorded in Table 2. For details, refer to Table 2.

**Table 2**

| Picture key (string) | Group_key (string) | Year (int) | group by (int) | thumbnail key (string) |
|---|---|---|---|---|
| "Picture 1" | "Group 1" | 201901 | 01 | "thumbnail 1" |
| ... | ... | ... | ... | ... |

In Table 2, a Picture key field indicates a picture identifier, a Group_key field indicates a group identifier, a Year field indicates time, a group by field indicates a ranking of a picture in the group, and a thumbnail Key field indicates an identifier of a thumbnail. Certainly, the thumbnail Key field may further include a thumbnail_moon_key field and a thumbnail_year_key field. The thumbnail_moon_key field indicates an identifier of a month thumbnail. The thumbnail_year_key field indicates an identifier of a year thumbnail.

After the electronic device obtains picture groups, the electronic device may encode thumbnails in each group separately, or the electronic device may encode thumbnails in each group collectively and then store the encoded thumbnails in the storage space by group. Subsequently, when the electronic device reads the thumbnail of the target picture, the electronic device may read, based on a group identifier, a group to which a target thumbnail belongs, and may read the target thumbnail. In other words, the electronic device may read the group corresponding to the target thumbnail as a whole, and may read thumbnails of a plurality of target pictures at a time. This effectively prevents reading the thumbnails separately and reduces resource consumption of the electronic device. For details, refer to subsequent related descriptions. Details are not described herein again.

To further improve a thumbnail refresh and display rate and reduce occurrence of white blocks, after the electronic device obtains the picture groups, the electronic device may stitch all thumbnails in the groups to obtain a stitched image. The stitched image may include an image feature of each thumbnail. Subsequently, when displaying an image feature of the target thumbnail, the electronic device may obtain the image feature by reading and decoding the stitched image including the image feature of the target thumbnail. To be specific, the electronic device may read and decode a stitched image corresponding to the target thumbnail, to read a plurality of thumbnails at a time and decode the plurality of thumbnails at a time into the memory space. This effectively prevents reading and decoding thumbnails separately, and reduces resource consumption of the electronic device. Generation of the stitched image is described in S730, and is specifically as follows:
S730: The electronic device stitches the thumbnails of all the pictures in the group in a second preset sequence, to obtain the stitched image.

After the electronic device groups a plurality of pictures on the electronic device, the electronic device may stitch thumbnails corresponding to pictures in groups at the following trigger timing. Details are as follows:
Trigger timing 1: The electronic device receives an operation on the electronic device.

In an example, when the user triggers the screen-off operation, or when the electronic device is being charged or starts the gallery application, the electronic device groups pictures in a timeline album, generates thumbnails for all pictures in groups, and then stitches the thumbnails.

Trigger timing 2: The electronic device receives, for the first time, a trigger operation of displaying the first view on the interface.

In another example, when the electronic device receives, for the first time, the trigger operation of displaying the first view on the interface, the electronic device groups pictures in a timeline album, generates thumbnails of all pictures in groups, and then stitches the thumbnails.

Trigger timing 3: The electronic device automatically generates a plurality of thumbnails.

In still another example, when the electronic device automatically performs a thumbnail generation operation, or the electronic device periodically performs a thumbnail generation operation, or the cloud synchronizes a picture to the electronic device completely, the electronic device stitches thumbnails generated based on all pictures in groups.

Further, the electronic device may stitch image features of all thumbnails in a thumbnail group into a stitched image in the second preset sequence. The second preset sequence may be understood as a ranking of each picture in the group, or a location order of the thumbnail of each picture. In other words, the electronic device stitches the image features of all the thumbnails in the group into the stitched image in the second preset sequence.

In an example, that the electronic device may stitch the image features of all the thumbnails in the thumbnail group into the stitched image in the second preset sequence may be specifically that, for example, the electronic device may stitch image features of a plurality of rows of thumbnails or may stitch image features of one row of thumbnails. Specifically, if the image features of one row of thumbnails are stitched, a location sequence of the thumbnails is a stitching sequence. A corresponding area of each thumbnail in the stitched image is [64*pos, 0, 64*pos+64, 64], where the area corresponds to an area [left, upper, right, lower], and the area corresponds to an image feature of the thumbnail. Subsequently, the electronic device searches for an image feature in the stitched image by using a posInGroup field in a picture information master table gallery_media, and then may directly read the corresponding area [64*pos, 0, 64*pos+64, 64] of the stitched image, where the area corresponds to an image feature of the area [left, upper, right, lower]. If the image features of the plurality of rows of thumbnails are stitched, for example, n columns (10 columns), a corresponding area of each thumbnail in the stitched image is [(posInGroup % n)*64, (posInGroup/n)*64, (posInGroup % n)*64+64, (posInGroup/n)*64+64], and the area corresponds to an image feature of the thumbnail. Subsequently, the electronic device searches for an image feature of a corresponding area [(posInGroup % n)*64, (posInGroup/n)*64, (posInGroup % n)*64+64, (posInGroup/n)*64+64] in the stitched image by using a posInGroup field in a picture information master table gallery_media.

Then, the electronic device stores the stitched image in the memory space, where an identifier of the stitched image is an identifier of the thumbnail group and is consistent with an identifier of a picture group corresponding to the stitched image. The identifier of the stitched image is included in the group information and/or the picture information.

For example, after the electronic device obtains the stitched image, a group information table in the local storage space of the electronic device changes accordingly. The group information may further include a location (or a ranking) of a thumbnail corresponding to each picture in the stitched image. For example, the group information stored in the storage space of the electronic device may be recorded in Table 3. Table 3 corresponds to Table 1, as shown in Table 3.

**Table 3**

| Thumbs_group | | | |
|---|---|---|---|
| Group_key (string) | Year (int) | Thumbs_count (int) | Kv_count |
| "Group 1" | 2019 | 100 | 99 |
| ... | ... | ... | ... |

In Table 2, a Group_key field indicates a group identifier, a Year field indicates time, a Thumbs_count field indicates the first quantity, and a Kv_count field indicates a count of kv written into a thumbnail.

In a specific implementation, as shown in FIG. 6, S730 may be specifically: ④. A stitching module in the gallery application of the electronic device may stitch the thumbnails generated based on all the pictures in the first group into the stitched image, after the grouping module in the gallery application obtains the thumbnail group. ⑤. A writing module in the gallery application writes information about the stitched image into the storage space.

In a specific implementation, SS730 may be specifically implemented as follows:
It is assumed that a picture information master table 4 of the electronic device in the storage space corresponds to Table 2, and Table 4 may be specifically:

**Table 4**

| Table 4 gallery_media | | | |
|---|---|---|---|
| Picture key (string) | Group_key (string) | Year _ thumbs _ group _key | Year _thumbs_pos_in_ group |
| "Picture 1" | Group 1 | Year thumbnail group key | Location of year thumbnails in a stitched image |
| ... | ... | ... | ... |

A process of obtaining the stitched image may be specifically as follows: For example, browsing the year view for the first time is used as an example. When the electronic device receives, for the first time, a trigger operation of displaying the year view on the interface, the electronic device downsamples, scales, or crops pictures in the first group. The electronic device generates the thumbnails of all the pictures in the first group, and writes the thumbnails into storage space KvDB, where KvDB is a database that is of the storage space and is used to store thumbnail data. Based on a picture path, the electronic device queries a group identifier Group_key from a gallery_media table that includes all information fields of a picture. Based on the group identifier Group_key, the electronic device reads a thumbnail write count Kv_count in the group from Thumbs_group shown in Table 3. If Kv_count is 0, it indicates that the picture is a first thumbnail written into Kv after grouping, and the electronic device traverses a quantity of all thumbnails written into Kv in the group, and accumulates the quantity to Kv_count. If Kv_count is not 0, the electronic device directly adds 1 to Kv_count. The electronic device determines whether Kv_count is less than a quantity Thumbs_count of thumbnails recorded by group. If a determining result indicates that Kv_count is less than the quantity Thumbs_count, the electronic device adds 1 to Kv_count, and writes the Kv_count back to a Thumbs_group table. If a determining result indicates that Kv_count is not less than the quantity Thumbs_count, the electronic device queries, from the gallery_media table, scaled or cropped year view thumbnails corresponding to all the pictures in the group. If year thumbnails corresponding to all the pictures exist, the electronic device performs stitching to obtain the stitched image. After the stitching is completed, the electronic device writes, into Year_thumbs_pos_in_ group in the gallery_media table, a location at which the thumbnails are stitched, where pos is 1 by default at the beginning, indicating that the thumbnails are not stitched. Certainly, a process of obtaining the stitched image is not limited to browsing the year view for the first time, or may be browsing the month view or the day view for the first time. Details are not enumerated in embodiments of this application. For example, when the day view is browsed for the first time, the electronic device may further generate a year thumbnail with a size of 64*64 pixels based on a day thumbnail with a size of 256*256 pixels.

After the electronic device obtains the stitched image, subsequently, when the electronic device receives a year view refresh request, the electronic device may obtain a thumbnail based on the corresponding stitched image and the request, and display the thumbnail on the interface of the gallery application. For details, refer to subsequent related descriptions. Details are not described herein again.

In this application, the thumbnails in the thumbnail group are stitched into the stitched image, and the stitched image corresponds to a control that is of the gallery application and that is configured to carry an image feature of the thumbnail. In this way, the image feature of the stitched image can be directly bound to a control in a corresponding area of the interface, thereby reducing a quantity of times of uploading a thumbnail to a GPU, and reducing load of rendering threads. Alternatively, a thumbnail can be cropped from the stitched image based on a control on an interface, and thumbnail cropping on the stitched image is completed in the memory. Compared with a solution of decoding thumbnails separately, this greatly improves decoding performance, greatly improves a thumbnail refresh and display speed, and greatly reducing or even eliminating white blocks.

In some embodiments, a picture in the gallery application of the electronic device is updated at any time, and when the picture in the gallery application changes, the foregoing thumbnail group changes accordingly. Specifically, as described in S740, details are as follows:
S740: When pictures in the gallery application change, the electronic device updates the group and the stitched image.

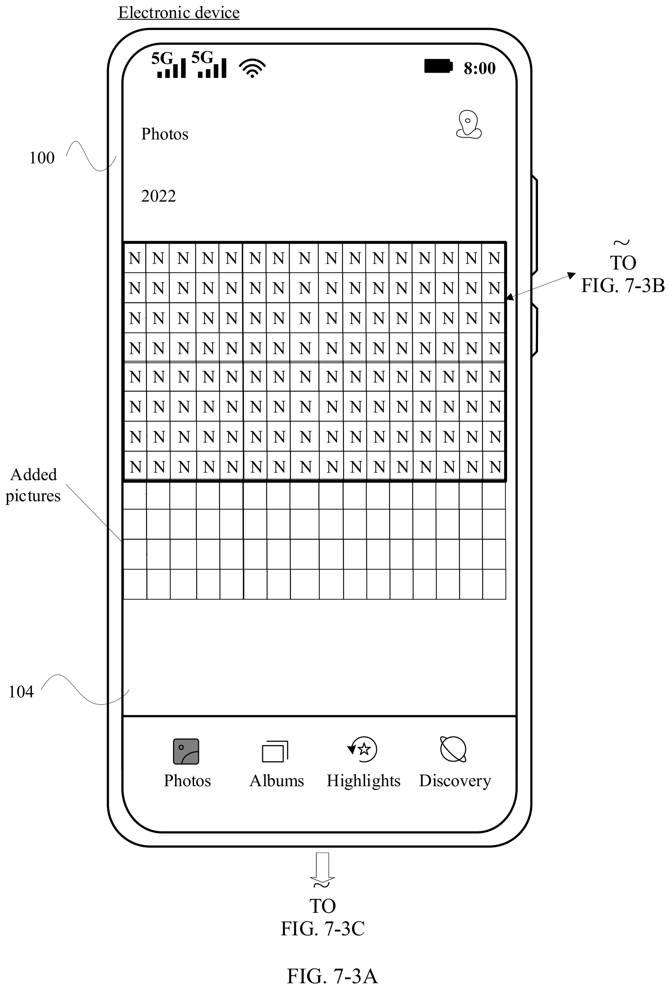

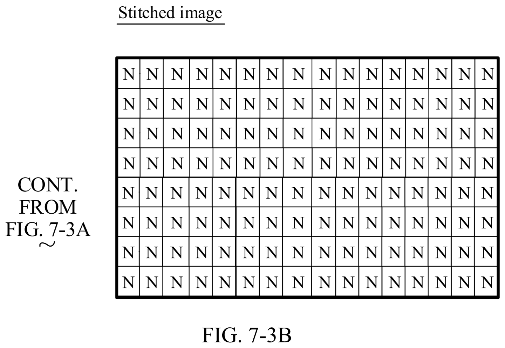

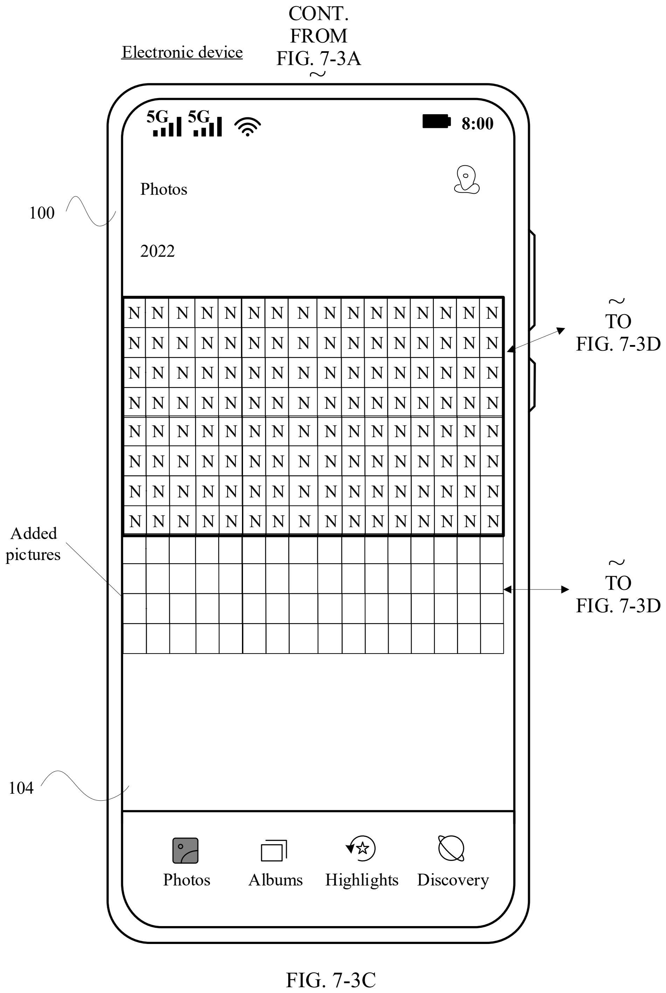

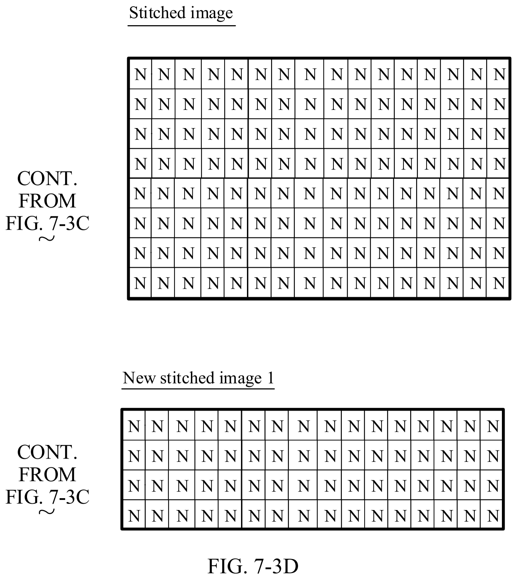

In an example, as shown in FIG. 7-2, S740 may be specifically implemented as follows: In S741, when a picture is added to the gallery application, the electronic device determines whether a quantity of added pictures reaches a first threshold. If the quantity of the added pictures reaches the first threshold, in S742, the electronic device groups the added picture and generates a corresponding new stitched image. If the quantity of the added pictures does not reach the first threshold, in S743, the electronic device does not group the added picture, and keeps the original stitched image. For example, FIG. 7-3A to FIG. 7-3D show pictures added to the gallery application of the electronic device 100. Before the pictures are added, a group of existing pictures in the electronic device 100 corresponds to a stitched image shown in FIG. 7-3A to FIG. 7-3D. After the picture is added, the electronic device 100 determines that the quantity of the added pictures reaches the first threshold, and capture time of these added pictures is continuous. In this case, the electronic device 100 classify the added pictures into one group, and obtains a corresponding new stitched image 1.

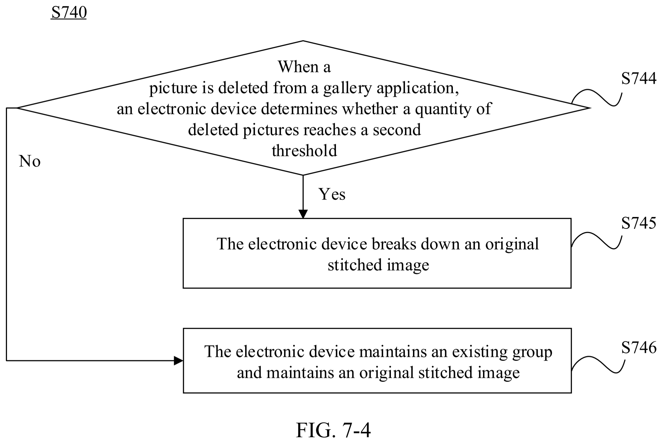

In an example, as shown in FIG. 7-4, S740 may be specifically implemented as follows: In S744, when a picture is deleted from the gallery application, the electronic device determines whether a quantity of deleted pictures reaches a second threshold.

S745: If the quantity of the deleted pictures reaches the second threshold, the electronic device breaks down the original stitched image.

More specifically, in some embodiments, when the quantity of the deleted pictures reaches the second threshold, it is further determined whether these deleted pictures are pictures whose capture time is continuous. For example, when the deleted pictures are pictures whose capture time is continuous, the electronic device breaks down the existing group, and regroups the pictures on the electronic device. Correspondingly, the stitched image also needs to be stitched again. When the deleted pictures are pictures whose capture time is discontinuous, the electronic device keeps the existing group, and keeps the original stitched image.

S746: If the quantity of the deleted pictures does not reach the second threshold, the electronic device keeps the existing group and keeps the original stitched image.

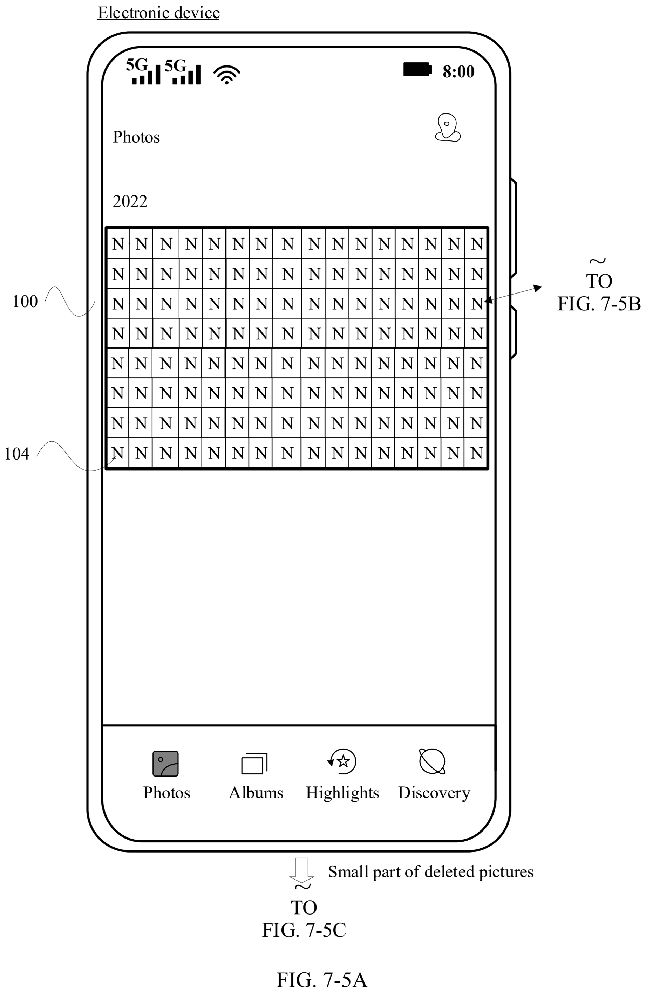

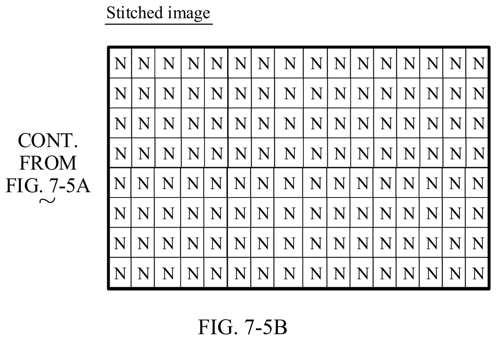

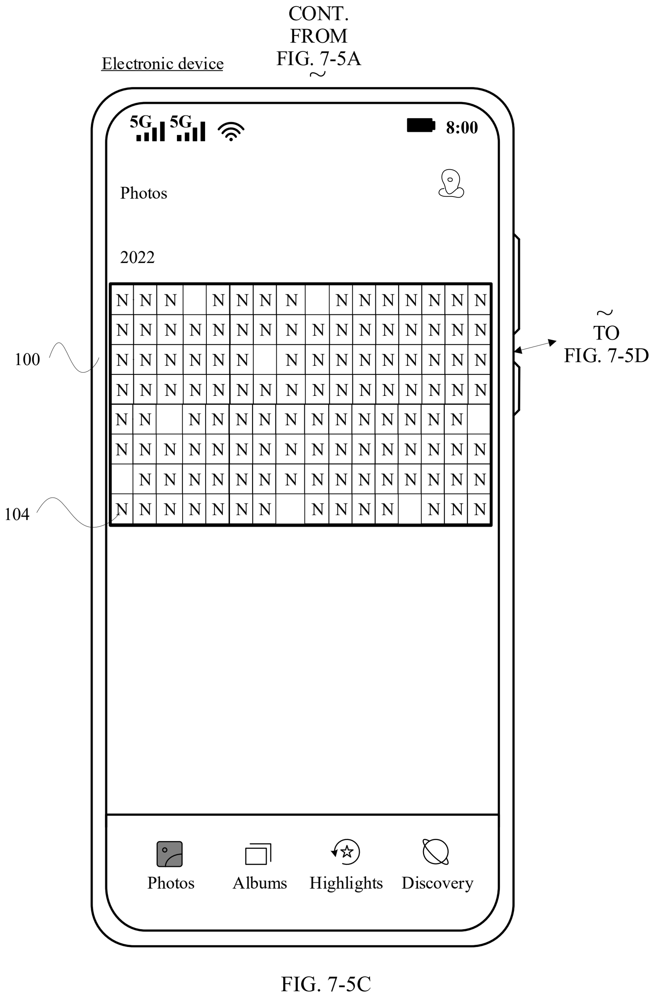

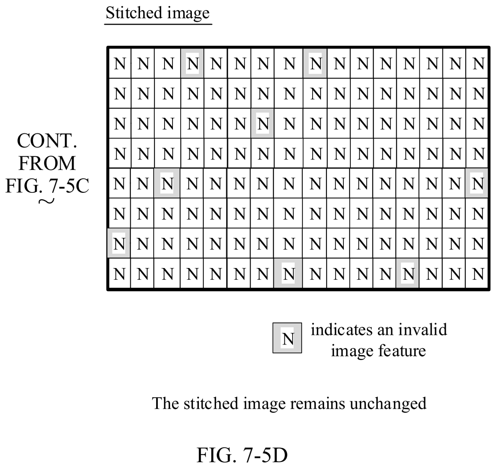

For example, as shown in FIG. 7-5A to FIG. 7-5D, a small part of pictures are deleted from the gallery application of the electronic device 100. To be specific, when the quantity of the deleted pictures does not reach the second threshold, the electronic device keeps the existing group and the existing stitched image. The stitched image includes invalid image features, such as image features in a gray-scale area shown in FIG. 7-5A to FIG. 7-5D.

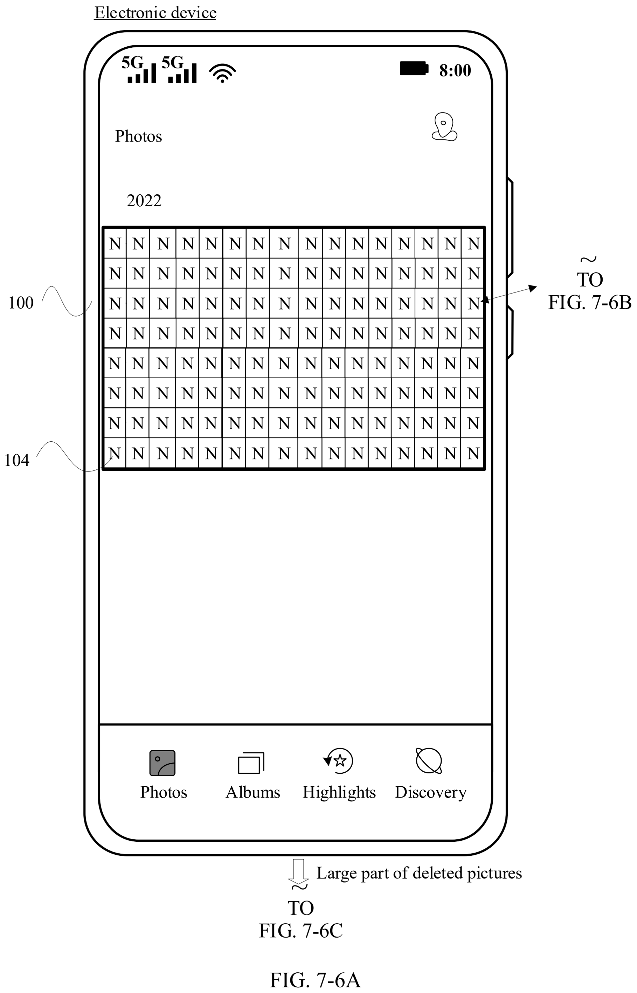

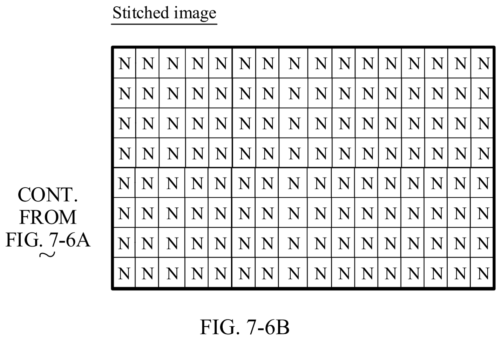

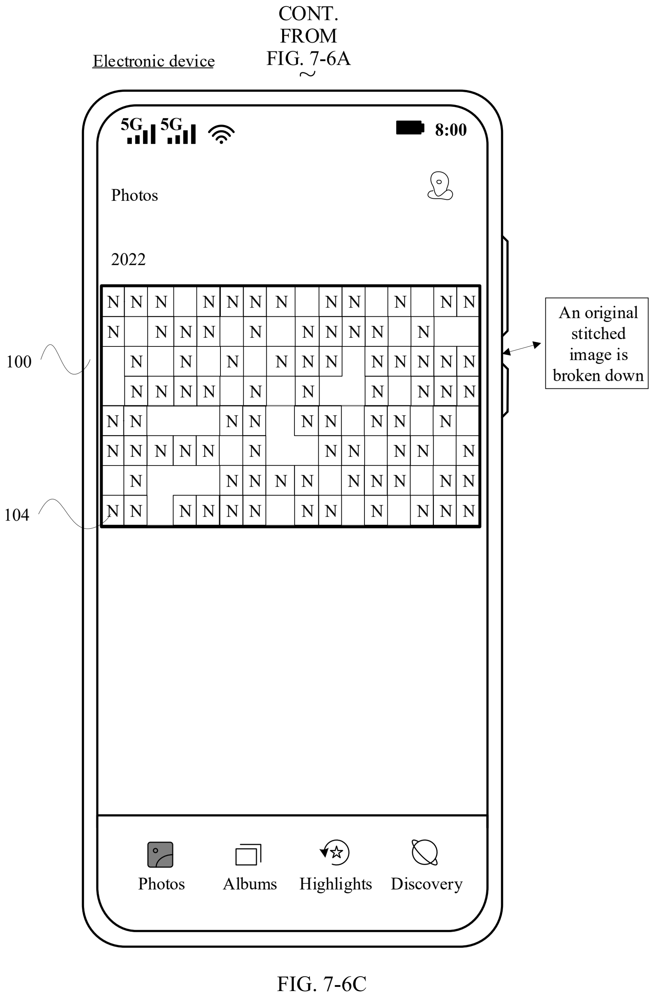

For example, as shown in FIG. 7-6A to FIG. 7-6C, a large part of pictures are deleted from the gallery application of the electronic device 100. To be specific, when the quantity of the deleted pictures reaches the second threshold, the electronic device breaks down the existing group, and regroups the pictures in the electronic device. Correspondingly, the stitched image corresponding to the group are also broken down.

In this application, adjacent thumbnails displayed on an interface of the electronic device are grouped together as much as possible based on a change request of pictures in the gallery application, to flexibly adjust a stitched image. Subsequently, when the electronic device refreshes and displays thumbnails, the electronic device may find a corresponding thumbnail from the updated stitched image, resulting in high accuracy. This improves user experience.

### Second phase: application phase.

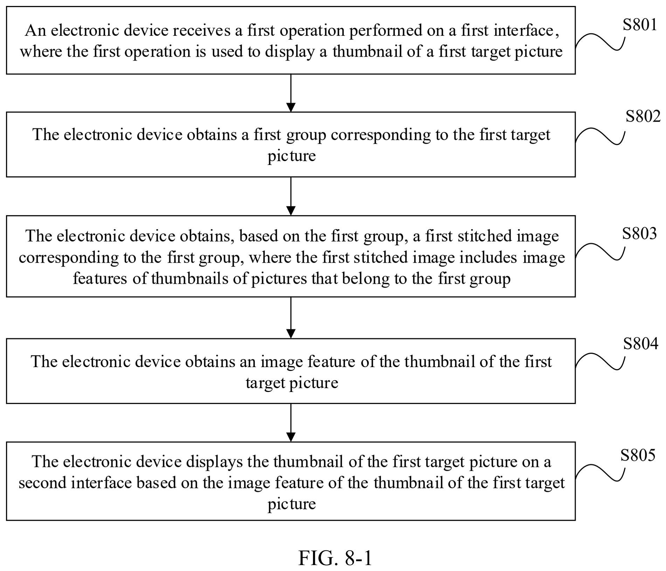

FIG. 8-1 is a schematic flowchart of a view display method according to an embodiment of this application. As shown in FIG. 8-1, the method may be performed by an electronic device. The method may include S801, S802, S803, S804, and S805 (some steps are optional). For details of S801, S802, S803, S804, and S805, refer to descriptions in the following embodiments. Details may be as follows.

S801: The electronic device receives a first operation performed on a first interface, where the first operation is used to display a thumbnail of a first target picture.

In an example, S801 may be specifically: The electronic device receives a first operation on a first interface of a gallery application, where the first operation is used to trigger displaying of the thumbnail of the first target picture on the first interface in a manner of a first view.

The first operation may include a sliding operation, a pressing operation, a tap operation, a double-finger pinching operation, and the like. The sliding operation may include a single-finger sliding operation or a multi-finger sliding operation. For example, the first operation may include a sliding operation performed by two fingers of the user along arrows on the interface 103 shown in FIG. 2.

The first view may include a month view or a year view. Certainly, the first view is not limited to the foregoing examples. This is not specifically limited in embodiments of this application. In this embodiment of this application, an example in which the first view is the year view is used for description.

S802: The electronic device obtains a first group corresponding to the first target picture.

In an example, S802 may be specifically: In response to the first operation, the electronic device determines a first display area corresponding to the first view, where the first display area includes a first location used to display the thumbnail of the target picture.

In a specific implementation, with reference to FIG. 6, S802 may be specifically: ⑥. In response to the first operation, the electronic device determines the first display area corresponding to the first view, where the first display area includes the first location used to display the thumbnail of the target picture. In addition, the electronic device sends a thumbnail refresh request to a reading module in the gallery application, where the request may carry group information corresponding to the target picture.

S803: The electronic device obtains, based on the first group, a first stitched image corresponding to the first group, where the first stitched image includes image features of thumbnails of pictures that belong to the first group.

In an example, S803 may be specifically: The electronic device reads, based on group information of the first group to which the target picture belongs, the first stitched image corresponding to the first group, where the first group is obtained by pre-grouping a plurality of pictures in a first view scenario based on a first preset sequence and a first quantity, and the first stitched image includes image features of thumbnails of all pictures in the first group.

For the first preset sequence and the first quantity, refer to related descriptions in the first phase. Details are not described herein again.

In some examples, the group information may include an identifier of each group, picture capture time of each group, the first quantity, and an identifier of each picture. Certainly, the group information may further include an identifier of a view scenario and an identifier of a thumbnail corresponding to each picture. Certainly, the group information may further include other information. This is not specifically limited in embodiments of this application.

In some examples, information about a picture may include an identifier of the picture, a size of the picture, capture time of the picture, an identifier of a group to which the picture belongs, an identifier of a thumbnail of the picture, a ranking of the picture in the group, and the like. Certainly, the information about the picture may further include other information. This is not specifically limited in embodiments of this application.

For example, Table 4 is still used. It is assumed that an identifier of the target picture is Picture 1. Based on the identifier Picture 1 of the target picture, the electronic device finds an identifier Group 1 of the first group in gallery_media shown in Table 4. Based on the identifier Group 1 of the first group, the electronic device finds an identifier Group 1 of the first stitched image. The electronic device reads the first stitched image from the storage space based on the identifier Group 1 of the first stitched image.

In a specific implementation, with reference to FIG. 6, S803 may be specifically: . The reading module in the gallery application of the electronic device reads, from the storage space based on the identifier of the first group, information about a stitched image corresponding to the target picture, for example, the identifier of the first stitched image. The reading module of the electronic device reads the first stitched image from the storage space based on the identifier of the first stitched image. ⑧. After the reading module reads the stitched image corresponding to the target picture, the reading module sends the information about the stitched image to a decoding module of the electronic device.

S804: The electronic device obtains an image feature of the thumbnail of the first target picture.

In an example, S804 may be specifically: The electronic device decodes the first stitched image to obtain the image feature of the thumbnail of the target picture.

For example, Table 4 is still used. The electronic device reads the first stitched image, and decodes the first stitched image into the memory space, to obtain the image features that are of the thumbnails of all the pictures in the first group and that are included in the first stitched image.

In a specific implementation, with reference to FIG. 6, S804 may be specifically: ⑨. The decoding module of the electronic device decodes the stitched image that is read by the reading module and that corresponds to the target picture, to obtain an image feature of each thumbnail included in the stitched image corresponding to the target picture.

S805: The electronic device displays the thumbnail of the first target picture on a second interface based on the image feature of the thumbnail of the first target picture.

In an example, S805 may be specifically: The electronic device obtains the first location that is of the second interface and that is used to display the thumbnail of the first target picture. The electronic device displays the thumbnail of the first target picture at the first location based on the first location and the image feature of the thumbnail of the first target picture.

For example, Table 4 is still used. Based on the identifier Group 1 of the first stitched image and a location of a stitched year thumbnail in the Year_thumbs_pos_in_group field, the electronic device obtains, in an area corresponding to the location of the first stitched image, the image feature of the thumbnail of the target picture Picture 1. Then, the electronic device binds the image feature of the thumbnail of the target picture Picture 1 to the first location, and performs rendering and display operations. Finally, the thumbnail of the target picture is displayed at the first location.

In a specific implementation, with reference to FIG. 6, S805 may be specifically: ⑩. A drawing module of the electronic device crops, from the stitched image based on a location of the target picture in the first group (namely, a location of the thumbnail corresponding to the target picture in the stitched image), an image feature of a thumbnail in an area corresponding to the location. The drawing module establishes a correspondence between the image feature of the thumbnail of the target picture and the first location. ⑪. A rendering module of a GPU renders the image feature of the thumbnail of the target picture at the first location, and displays the image feature on the display 280.

It can be learned that this application is different from an existing view display method as follows: During thumbnail reading and decoding, the electronic device reads and decodes thumbnails in a same group once without a need to read and decode the thumbnails separately, so that resource consumption of the electronic device is effectively reduced, and a speed of reading and decoding thumbnails on the electronic device is improved. This shortens display time required for a thumbnail, and avoids a phenomenon that a white block temporarily appears in an area in which the thumbnails are to be displayed.

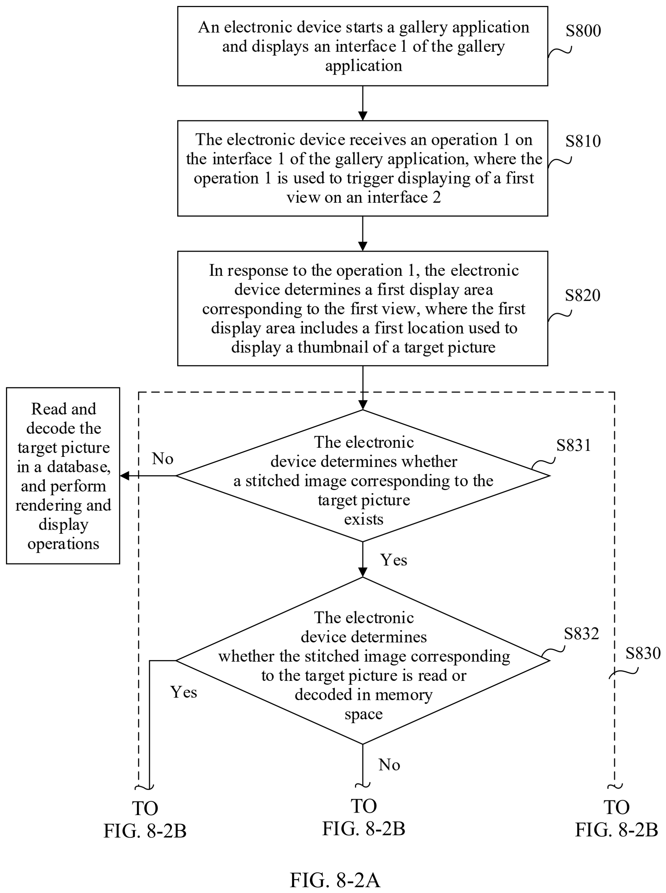

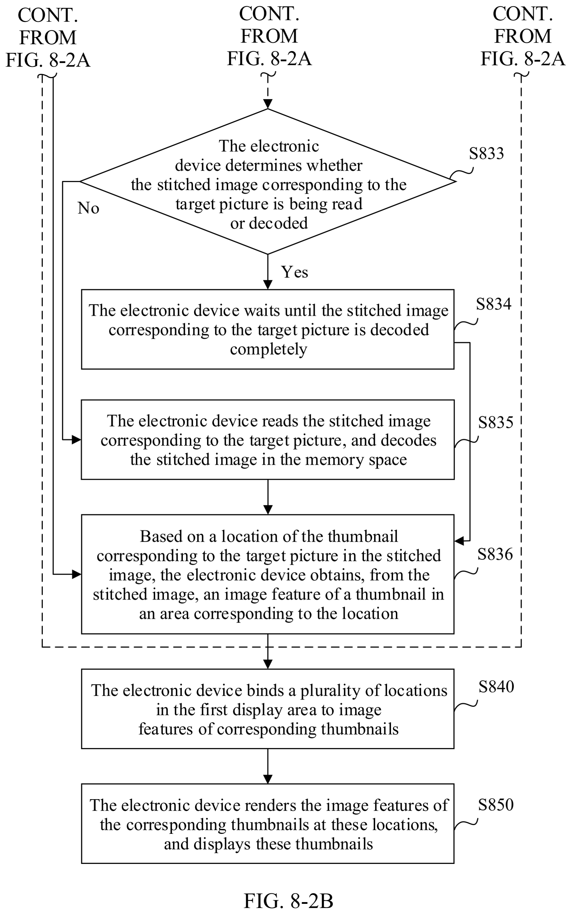

FIG. 8-2A and FIG. 8-2B are a schematic flowchart of a view display method according to an embodiment of this application. As shown in FIG. 8-2A and FIG. 8-2B, the method may be performed by an electronic device. The method may include S800, S810, S820, S830, S840, and S850 (some steps are optional). For details of S800, S810, S820, S830, S840, and S850, refer to descriptions in the following embodiments. Details may be as follows.

S800: The electronic device starts the gallery application and displays an interface 1 of the gallery application.

In an example, as shown in FIG. 1, the user taps an interface 101 of the electronic device 100 to display an icon 102 of the gallery application. The electronic device 100 starts the gallery application in response to the tap operation of the user. The display interface of the electronic device 100 jumps to an interface 103 (namely, the interface 1) shown in FIG. 2, and the interface 103 includes a plurality of pictures.

S810: The electronic device receives an operation 1 on the interface 1 of the gallery application, where the operation 1 is used to trigger displaying of a first view on an interface 2.

The first view may include a month view or a year view. Certainly, the first view is not limited to the foregoing examples. This is not specifically limited in embodiments of this application.

The operation 1 may include a sliding operation, a pressing operation, a tap operation, a double-finger pinching operation, and the like. The sliding operation may include a single-finger sliding operation or a multi-finger sliding operation. For example, the operation 1 may include a sliding operation performed by two fingers of the user along arrows on the interface 103 shown in FIG. 2.

In other words, the operation 1 is used to switch between view scenarios. For example, as shown in FIG. 2, when the user slides on the interface 103 along the arrows once, it means that the month view is displayed on the interface of the gallery application. Based on this, when the user slides again on the interface 103 along the arrows, it means that interface displaying of the gallery application is switched from the month view to the year view.

Certainly, the operation 1 is not limited to a view switching scenario, and may be further used for view browsing. For example, as shown in FIG. 4, when the user presses a control 107 on a year view interface shown in FIG. 4 to slide along an arrow " 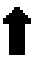 "or an arrow " 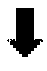 ", views of years are sequentially displayed on an interface 104 of the electronic device 100. Alternatively, the user may operate an interface on a year view interface shown in FIG. 4. For example, the user may slide along an arrow " 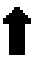 "or an arrow " 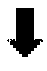 "on the interface. In response to the user operation, views of years are sequentially displayed on the interface 104 of the electronic device 100. Certainly, there may be another case. This is not specifically limited in embodiments of this application.

S820: In response to the operation 1, the electronic device determines a first display area corresponding to the first view, where the first display area includes a first location used to display a thumbnail of a target picture.

In an example, the thumbnail of the target picture may be understood as the thumbnail of the target picture in the first group in the first view. In other words, thumbnails corresponding to a same picture in different views are also different. For example, in a month view scenario, the target picture corresponds to a thumbnail of 265*265 pixels; and in a year view scenario, the target picture corresponds to a thumbnail of 64*64 pixels.

In an example, information such as a layout and a size of the first display area is preset. The first display area may include a plurality of first locations, and each first location corresponds to a location of one thumbnail. It may be understood that the first display area is a control 1, the first location may be understood as a control 2, and the control 1 is formed by stitching a plurality of control 2. Each control 2 may be bound to an image feature of a thumbnail. Certainly, in different views, the first display area is also different. For example, in the year view scenario, the first display area may include 5 rows and 16 columns of locations. In other words, 80 thumbnails may be displayed in a display area of the first interface.

In a possible implementation, S820 may include S821 and S822. S821 and S822 may be specifically implemented as follows: In S821, the electronic device pre-stores a correspondence between each view and operation information. When the electronic device receives the operation 1, the electronic device may determine, based on operation information of the operation 1 and the correspondence between each view and the operation information, the first view corresponding to the operation 1. In S822, the electronic device pre-stores a correspondence between each view and a display area. After the electronic device determines the first view, the electronic device may determine the first display area corresponding to the first view.

In a specific implementation, with reference to FIG. 6, S820 may be specifically: ⑥. In response to the operation 1, the electronic device determines the first display area corresponding to the first view, where the first display area includes the first location used to display the thumbnail of the target picture. In addition, the electronic device sends a thumbnail refresh request to a reading module in the gallery application, where the request may carry group information corresponding to the target picture.

S830: The electronic device reads, based on the group information corresponding to the target picture, a stitched image corresponding to the first group to which the target picture belongs, to obtain an image feature of the thumbnail of the target picture, where the stitched image includes the image feature of the thumbnail of the target picture.

As described in the first phase, the thumbnails of the plurality of pictures in the gallery application of the electronic device are grouped, and the group information and/or information about a picture is recorded. The group information may include at least one of the following: a group identifier, an identifier of a view scenario, capture time of pictures in each group, a quantity of thumbnails corresponding to a view scenario, an identifier of each picture, and the like. The information about the picture may include at least one of the following: an identifier of the target picture, a size of the target picture, capture time of the target picture, an identifier of a group to which the target picture belongs, an identifier of a thumbnail of the target picture, and a ranking of the target picture in the group. Based on this, the electronic device may determine, based on the first location, a target picture that needs to be refreshed and displayed at the first location and an identifier of a group in which the target picture is located. Then, the electronic device obtains, based on the identifier of the group and a ranking of the target picture in the group, an image feature of a thumbnail corresponding to the target picture from a stitched image corresponding to the identifier of the group, that is, obtains the image feature of the thumbnail of the target picture corresponding to the first location.

In this way, the electronic device may read the stitched image corresponding to the group in which the target picture is located, that is, read the group corresponding to the target picture as a whole and read thumbnails of a plurality of pictures at a time. This effectively prevents reading the thumbnails separately and reduce resource consumption of the electronic device.

In a specific implementation, with reference to FIG. 6, S830 may be specifically: . The reading module in the gallery application of the electronic device reads, from the storage space based on the group identifier, information about a stitched image corresponding to the target picture.

In a specific implementation, as shown in FIG. 8-2A and FIG. 8-2B, S830 may include S831, S832, S833, S834, S835, and S836 (some steps are optional). S831, S832, S833, S834, S835, and S836 may specifically include the following content.

In some examples, the target picture may be a picture added to the electronic device, and the picture does not participate in the operation in the first phase. Therefore, it is possible that the target picture has neither a corresponding group nor a corresponding stitched image. Therefore, the electronic device needs to determine whether the stitched image corresponding to the target picture exists. A specific implementation is described in S831. Details are as follows:
S831: The electronic device determines whether the stitched image corresponding to the target picture exists; and if the stitched image corresponding to the target picture exists, performs S832; or if the stitched image corresponding to the target picture does not exist, reads and decodes the target picture in a database, and performs rendering and display operations.

Specifically, the electronic device may determine, based on the target picture and the group information stored in the storage space, whether a group identifier corresponding to the first group to which the target picture belongs exists. When the electronic device does not find the group identifier corresponding to the target picture, the electronic device determines that a group corresponding to the target picture does not exist. When the electronic device finds the group identifier corresponding to the target picture, the electronic device determines that a group corresponding to the target picture exists. The electronic device determines, based on the group identifier corresponding to the target picture, whether the stitched image corresponding to the first group to which the target picture belongs exists; and when the electronic device does not find the stitched image corresponding to the first group, the electronic device determines that the stitched image corresponding to the target picture does not exist; or when the electronic device finds the stitched image corresponding to the first group, the electronic device determines that the stitched image corresponding to the target picture exists.

In some examples, to avoid redundant operations, fully utilize decoded data in the memory space, and improve efficiency, the electronic device needs to further determine whether the stitched image corresponding to the target picture is read or decoded in the memory space; and if the electronic device determines that the stitched image corresponding to the target picture is read or decoded in the memory space, the electronic device may directly obtain, from the stitched image, the image feature of the thumbnail corresponding to the target picture. In this way, the redundant operations are effectively avoided, and the decoded data in the memory space is fully utilized. Therefore, the electronic device needs to further determine whether the stitched image corresponding to the target picture is read or decoded in the memory space. A specific implementation is described in S832. Details are as follows:

S832: The electronic device determines whether the stitched image corresponding to the target picture is read or decoded in the memory space; and if the stitched image corresponding to the target picture is not read or decoded in the memory space, performs S833; or if the stitched image corresponding to the target picture is read or decoded in the memory space, performs S836.

In a specific implementation, the electronic device searches whether the information about the stitched image corresponding to the target picture exists in the memory space. For example, the electronic device may determine whether an image feature of a thumbnail included in the stitched image exists in the memory space; and if the image feature exists, the electronic device may determine that the stitched image corresponding to the target picture is read or decoded in the memory space; or if the image feature does not exist, the electronic device determines that the stitched image corresponding to the target picture is not read or decoded in the memory space. Certainly, this embodiment of this application is not limited to the foregoing examples, and is not enumerated herein.

In a specific implementation, with reference to FIG. 6, S832 may be specifically: ⑧. After the reading module reads the stitched image corresponding to the target picture, the reading module sends the information about the stitched image to a decoding module of the electronic device.

Similarly, in some examples, to avoid redundant operations and improve efficiency, the electronic device needs to further determine whether the stitched image corresponding to the target picture is being read or decoded; and if the stitched image corresponding to the target picture is being read or decoded, waits until the stitched image is read or decoded completely, without a need to read or decode the stitched image corresponding to the target picture. This effectively avoids redundant operations and improves efficiency. Therefore, the electronic device needs to further determine whether the stitched image corresponding to the target picture is being read or decoded. A specific implementation is described in S833. Details are as follows:
S833: The electronic device determines whether the stitched image corresponding to the target picture is being read or decoded; and if the stitched image corresponding to the target picture is being read or decoded, performs S834; or if the stitched image corresponding to the target picture is not being read or decoded, performs S835.

That is, it is determined whether the electronic device requests to read and decode another thumbnail in the stitched image corresponding to the target picture; or in other words, whether the electronic device requests, for the first time based on the target picture, to read and decode the stitched image corresponding to the target picture.

S834: The electronic device waits until the stitched image corresponding to the target picture is decoded completely.

S835: The electronic device reads the stitched image corresponding to the target picture, and decodes the stitched image in the memory space.

In a specific implementation, with reference to FIG. 6, S835 may be specifically: ⑨. The decoding module of the electronic device decodes the stitched image that is read by the reading module and that corresponds to the target picture, to obtain an image feature of each thumbnail included in the stitched image corresponding to the target picture.

S836: Based on a location of the thumbnail corresponding to the target picture in the stitched image, the electronic device obtains, from the stitched image, an image feature of a thumbnail in an area corresponding to the location.

In a specific implementation, S836 may be specifically implemented as follows: The electronic device may directly obtain the image feature of the thumbnail of the target picture in the memory space based on the target picture. In another specific implementation, S836 may be specifically implemented as follows: The electronic device crops, based on a location (or a ranking) of the target picture in the first group, an image feature of a thumbnail in an area corresponding to a corresponding location of the stitched image. For generation of the stitched image and related descriptions thereof, refer to related descriptions in the first phase, and details are not described herein again.

For example, the electronic device searches for an image feature in the stitched image by using a posInGroup field of the target picture in the picture information master table gallery_media shown in Table 4, and then may directly read an image feature of a corresponding area [64*pos, 0, 64*pos+64, 64] in the stitched image, where pos indicates a ranking of the target picture. Similarly, the electronic device searches for an image feature in the stitched image by using a posInGroup field of another picture in the first group in a picture information master table gallery_media, and then may directly read an image feature of a corresponding area [(posInGroup % n) * 64, (posInGroup/n)*64, (posInGroup % n)*64+64, (posInGroup/n)*64+64 ] in the stitched image. In this way, the electronic device may obtain an image feature of a thumbnail of each picture in the memory space.

In a specific implementation, with reference to FIG. 6, S836 may be specifically: ⑩. A drawing module of the electronic device crops, from the stitched image based on the location of the target picture in the first group (namely, a location of the thumbnail corresponding to the target picture in the stitched image), an image feature of a thumbnail in an area corresponding to the location.

In this application, based on the location of the thumbnail corresponding to the target picture in the stitched image, an image feature of a thumbnail in an area corresponding to the location is cropped from the stitched image. Compared with a solution of decoding thumbnails separately, this greatly improves decoding performance, greatly improves a thumbnail refresh and display speed, and greatly reducing or even eliminating white blocks.

In another specific implementation, the implementation is different from the implementation shown in FIG. 8-2A and FIG. 8-2B as follows: After performing S831, the electronic device further performs S837, S838, and S839. In other words, S830 may include S831, S837, S838, and S839 (some steps are optional). S837, S838, and S839 may specifically include the following content.

In S831, the electronic device determines whether the stitched image corresponding to the target picture exists; and if the electronic device has the stitched image corresponding to the target picture, the electronic device needs to further determine whether the stitched image has been requested to be decoded by another picture in the group. In this way, when pictures in a same group are refreshed and displayed, a stitched image is requested to be decoded, without a need to decode other pictures in the group, thereby eliminating the need of requesting a same stitched image in the same group. For specific descriptions, refer to S837, S838, and S839.

S837: When the electronic device determines that the stitched image corresponding to the target picture exists, the electronic device reads group information corresponding to the stitched image.

That is, the electronic device reads a group identifier of the first group to which the target picture belongs. The electronic device may determine, based on the group identifier, information about the stitched image corresponding to the group identifier. For example, the information about the stitched image may include whether the stitched image is decoded, a picture identifier of the stitched image that is requested to be decoded, and the like.

S838: The electronic device determines whether a thumbnail decoding request has been delivered for the first group of pictures corresponding to the stitched image; and if no thumbnail decoding request is delivered for the first group of pictures, performs S839.

In other words, the electronic device determines whether another image in the first group sends a request for reading a first stitched image corresponding to the first group; and if the another image sends the request for reading the first stitched image corresponding to the first group, obtains the first stitched image corresponding to the first group stored in the memory.

S839: The electronic device reads the stitched image corresponding to the target picture, and decodes the stitched image in the memory space.

In other words, if the another picture does not send the request for reading the first stitched image corresponding to the first group, the first stitched image is read based on the group identifier of the first group and stored in the memory.

Based on the implementation step of S830, the electronic device may obtain image features of thumbnails corresponding to a plurality of pictures. Then, the view display method provided in this embodiment of this application may further include S840 and S850. In S840, the electronic device binds a plurality of locations in the first display area to image features of corresponding thumbnails. In a specific implementation, with reference to FIG. 6, S840 may be specifically: ⑩. The drawing module binds the image feature of the thumbnail of the target picture to the first location. In S850, the electronic device renders the image features of the corresponding thumbnails at these locations, and displays these thumbnails. In a specific implementation, with reference to FIG. 6, S850 may be specifically: ⑪. A rendering module of the GPU renders the image feature of the thumbnail of the target picture at the first location, and displays the image feature on the display 280. In this way, the electronic device may obtain the following display effects.

Display effect 1: The electronic device directly binds the image feature of the thumbnail to the location, and performs rendering and display. Details are as follows:
S840 may be specifically implemented as follows: The electronic device binds the image feature of the thumbnail corresponding to the target picture to the first location.

In general, the electronic device draws, at the first location of the first display area, the image feature of the thumbnail corresponding to the target picture.

In a specific implementation, with reference to FIG. 6, S840 may be specifically: ⑩. The drawing module binds the image feature of the thumbnail of the target picture to the first location.

S850 may be specifically implemented as follows: The electronic device renders the image feature that is of the thumbnail of the target picture and that is bound to the first location, and displays the thumbnail of the target picture at the first location of the first display area.

In other words, the electronic device renders the image feature that is of the thumbnail of the target picture and that is bound to the first location, to obtain the thumbnail of the target picture, and displays the thumbnail of the target picture at the first location of the first display area.

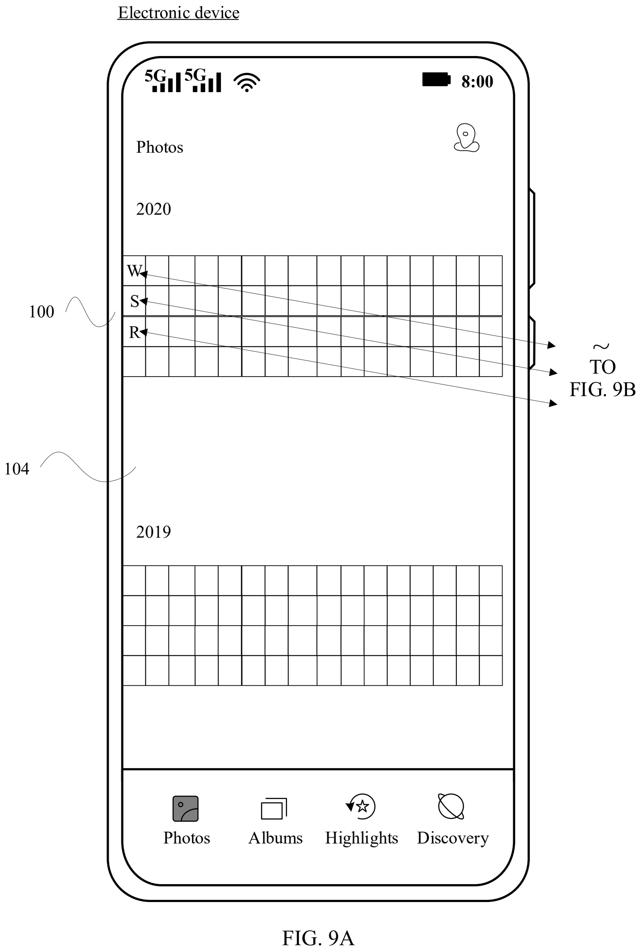

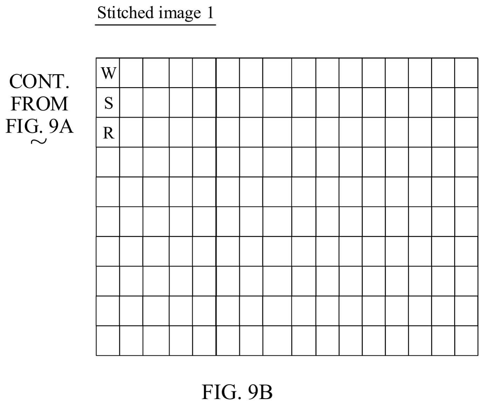

For example, as shown in FIG. 9A and FIG. 9B, the electronic device crops an image feature of a thumbnail W from a stitched image 1, binds the cropped image feature of the thumbnail W to a location 1 of the interface 104 of the gallery application of the electronic device, and performs rendering and display, to obtain the thumbnail W displayed on an interface shown in FIG. 9A and FIG. 9B. Similarly, the electronic device crops an image feature of a thumbnail S from the stitched image 1, binds the cropped image feature of the thumbnail S to a location 2 of the interface 104 of the gallery application of the electronic device, and performs rendering and display, to obtain the thumbnail S displayed on the interface shown in FIG. 9A and FIG. 9B. Similarly, the electronic device crops an image feature of a thumbnail R from the stitched image 1, binds the cropped image feature of the thumbnail R to a location 3 of the interface 104 of the gallery application of the electronic device, and performs rendering and display, to obtain the thumbnail R displayed on the interface shown in FIG. 9A and FIG. 9B.

In a specific implementation, with reference to FIG. 6, S851 may be specifically: ⑪. A rendering module of the GPU renders the image feature of the thumbnail of the target picture at the first location, and displays the image feature on the display 280.

In this embodiment of this application, the image feature of the thumbnail corresponding to the target picture is bound to the first location, and is then rendered and displayed, so that image features of thumbnails cropped from the stitched image are all rendered and displayed in the first display area, thereby achieving the purpose of greatly reducing or even eliminating white blocks.

Display effect 2: The electronic device collectively binds, to the first display area, image features of thumbnails of a stitched image corresponding to the first group to which the target picture belongs, and performs rendering and display. Details are as follows:
S840 may be specifically implemented as follows: The electronic device determines image features of thumbnails of the stitched image corresponding to the first group to which the target picture belongs.

Specifically, the electronic device determines the image features of the thumbnails of the stitched image based on the stitched image corresponding to the target picture, where the image features include the image feature of the thumbnail of the target picture.

S850 may be specifically implemented as follows: The electronic device sequentially binds the image features of the thumbnails of the stitched image to an area 1 of the first display area, and renders the image features of the thumbnails in the area 1, to display the thumbnails in the area 1.

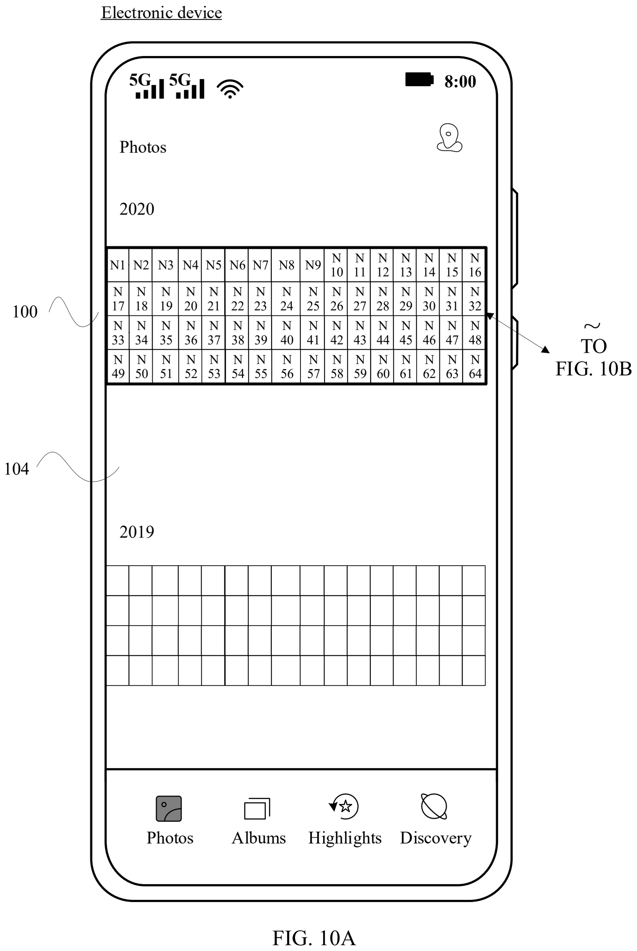

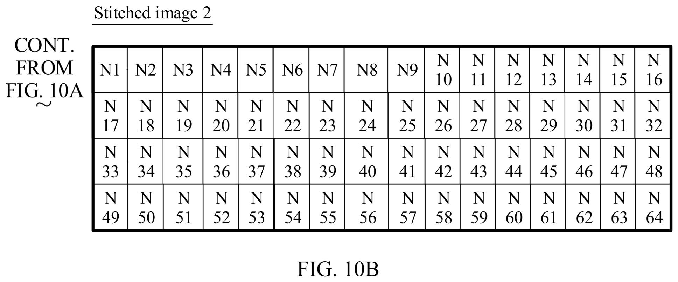

For example, when a location of the stitched image is consistent with a location of the picture in the group, as shown in FIG. 10A and FIG. 10B, the electronic device moves image features of all thumbnails N1 to N64 of a stitched image 2 to the interface 104 of the gallery application of the electronic device, and performs rendering and display, to obtain an area of thumbnails N1 to N64 displayed on an interface shown in FIG. 10A and FIG. 10B.

In a specific implementation, with reference to FIG. 6, S850 may be specifically: ⑩. The drawing module sequentially binds the image features of the thumbnails of the stitched image to the area 1 of the first display area. ⑪. The rendering module of the GPU renders the image features of the thumbnails in the area 1, and displays the image features on the display 280.

In this application, the electronic device collectively draws, in the area 1, the image features of the thumbnails of the stitched image corresponding to the first group to which the target picture belongs, and renders the image features of these thumbnails once. This avoids an operation of requesting a same stitched image by a same group, reduces overheads of cropping and returning thumbnails separately on the stitched image, and reduces load of interface threads. Further, this greatly reduces or even eliminates white blocks, further reduces load of the electronic device, and resolves problems such as stuttering, heat generation, and fast power consumption.

Display effect 3: The electronic device binds, to the first display area, image features of some thumbnails of the stitched image corresponding to the first group to which the target picture belongs, and renders and displays the first display area. Details are as follows:
S840 may be specifically implemented as follows: The electronic device determines image features of thumbnails of the stitched image corresponding to the first group to which the target picture belongs.

For details, refer to S840. Details are not described again in this embodiment of this application.

S850 may be specifically implemented as follows: The electronic device binds image features of thumbnails in a 1^{st} area of the stitched image to the area 1 of the first display area, binds image features of thumbnails in a 2^{nd} area of the stitched image to an area 2 of the first display area, and renders the image features of the thumbnails in the area 1 and the area 2, to display the thumbnails in the area 1 and the area 2.

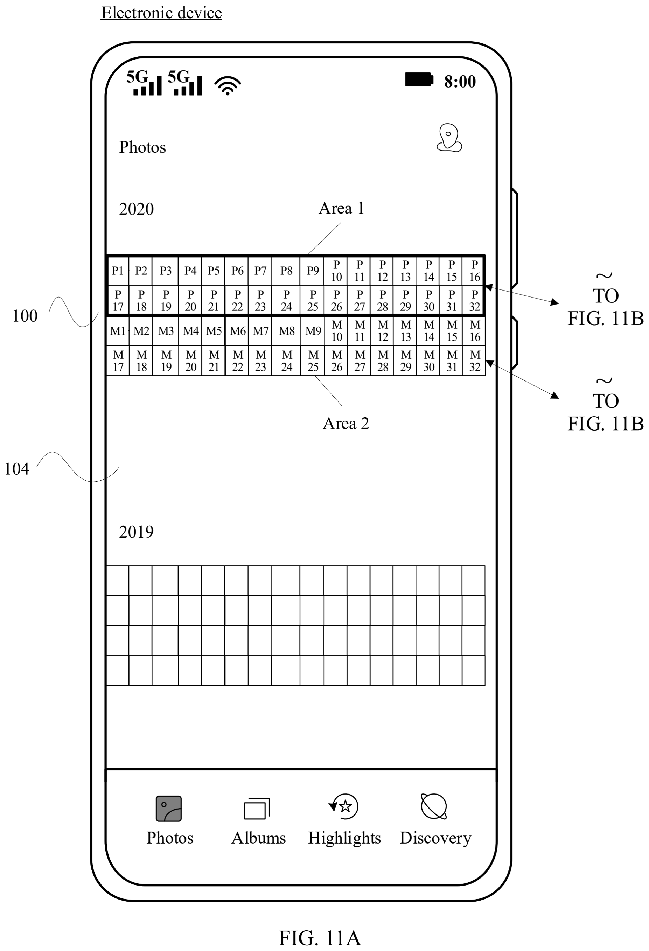

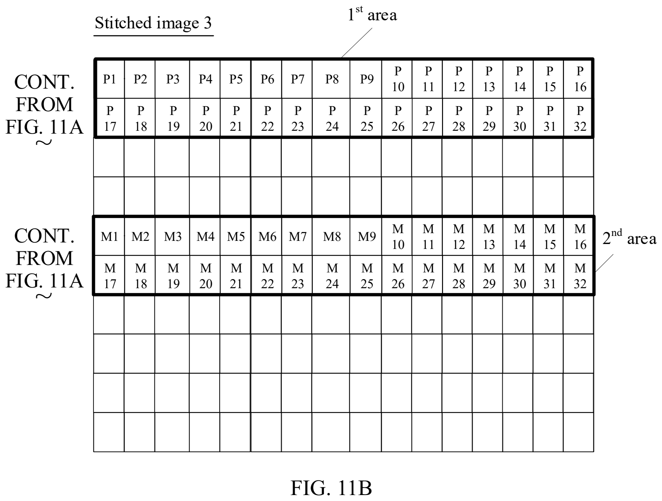

For example, as shown in FIG. 11A and FIG. 11B, the electronic device moves image features of all thumbnails P1 to P32 in a 1^{st} area and all thumbnails M1 to M32 in a 2^{nd} area of a stitched image 3 to the interface 104 of the gallery application of the electronic device, and performs rendering and display, to obtain an area of the thumbnails P1 to P32 and an area of the thumbnails M1 to M32 that are displayed on an interface shown in FIG. 11A and FIG. 11B.

In a specific implementation, with reference to FIG. 6, S850 may be specifically: ⑩. The drawing module binds the image features of the thumbnails in the 1^{st} area of the stitched image to the area 1 of the first display area, and binds the image features of the thumbnails in the 2^{nd} area of the stitched image to the area 2 of the first display area. ⑪. The rendering module of the GPU renders the image features of the thumbnails in the area 1 and the area 2, and displays the image features on the display 280.

In this application, the electronic device moves image features of thumbnails in some areas of a stitched image corresponding to a target thumbnail group as a whole, which can be applied to a scenario in which some images are deleted. In this way, thumbnails corresponding to undeleted images in the stitched image may be moved as a whole to a corresponding area of an interface for display, and thumbnails of adjacent images are displayed on the interface of the electronic device as much as possible. This avoids an operation of requesting a same stitched image by a same group, and greatly reduces or even eliminates white blocks. In addition, this further reduces load of the electronic device, and resolves problems such as stuttering, heat generation, and fast power consumption.

In some examples, when an image feature of a thumbnail of the stitched image is invalid, the electronic device may skip the image feature of the thumbnail. Specifically, a specific implementation of S850 may be: The electronic device detects validity of each picture in the first group. When detecting that a first picture in the first group is deleted, the electronic device may determine that the first picture is invalid. In this case, the electronic device sequentially arranges image features other than an image feature of a thumbnail corresponding to the first picture of the stitched image and binds the image features to the first display area.

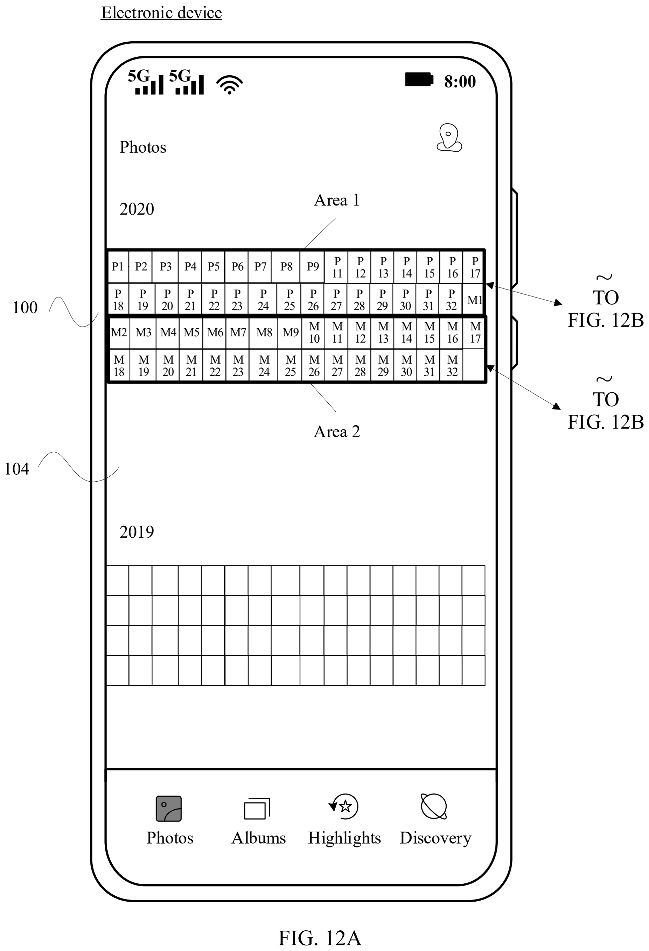

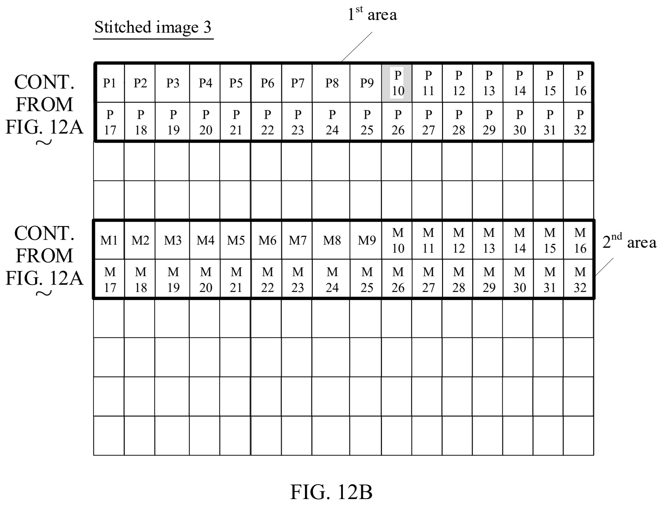

For example, as shown in FIG. 12A and FIG. 12B, the electronic device detects that an image feature of a thumbnail P10 in the 1^{st} area of the stitched image 3 is invalid. In this case, the electronic device sequentially arranges the thumbnails P1 to P9 and the thumbnails P11 to P32 in the 1^{st} area of the stitched image 3 in the area 1, and performs rendering and display. The electronic device moves image features of all thumbnails M1 to M32 in the 2^{nd} area of the stitched image 3 to the area 2, and performs rendering and display, to obtain an area of thumbnails P1 to P9 and P11 to P32 and an area of thumbnails M1 to M32 that are displayed on an interface shown in FIG. 12A and FIG. 12B.

In this application, when a picture is invalid, if the electronic device moves image features of a stitched image as a whole, an image feature of a thumbnail of the invalid picture may be skipped, and thumbnails of adjacent pictures are displayed on an interface of the electronic device as much as possible. This avoids an operation of requesting a same stitched image by a same group, and greatly reduces or even eliminates white blocks. In addition, this further reduces load of the electronic device, and resolves problems such as stuttering, heat generation, and fast power consumption.

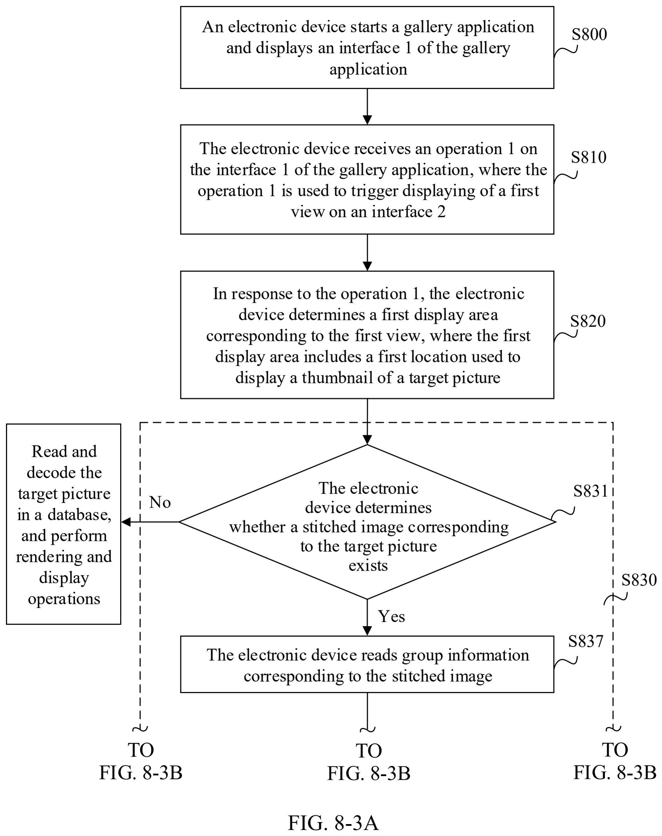

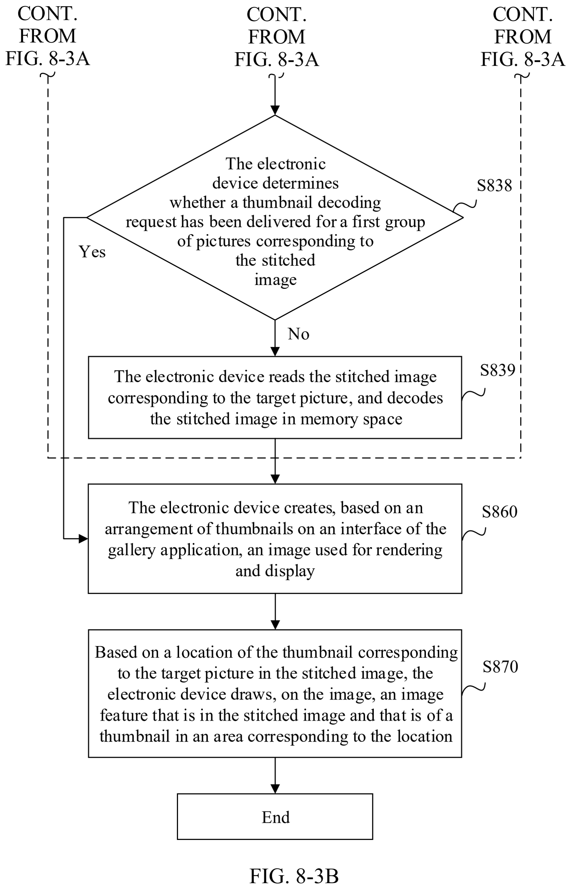

Display effect 4: The electronic device creates a second stitched image that is used for rendering and display, and then renders and displays an image on the first stitched image. For details, refer to FIG. 8-3A and FIG. 8-3B.

S860: The electronic device creates, based on an arrangement of thumbnails on an interface of the gallery application, an image used for rendering and display.

In other words, the electronic device creates the second stitched image based on an arrangement order of each thumbnail in the first group in the first display area, where the second stitched image is an image used for rendering and display.

In other words, the second stitched image is created on the interface of the gallery application based on the arrangement order of each picture in the first group and a display area of a thumbnail of each picture in the first group.

S870: Based on a location of the thumbnail corresponding to the target picture in the stitched image, the electronic device draws, on the image, an image feature that is in the stitched image and that is of a thumbnail in an area corresponding to the location.

In other words, the electronic device directly draws, on the second stitched image, an image feature of each thumbnail in a corresponding area of the first stitched image.

In other words, the electronic device binds the image feature of each thumbnail in the corresponding area of the first stitched image to the corresponding area of the second stitched image. The electronic device transmits the second stitched image to the GPU for rendering, and displays the second stitched image on a display.

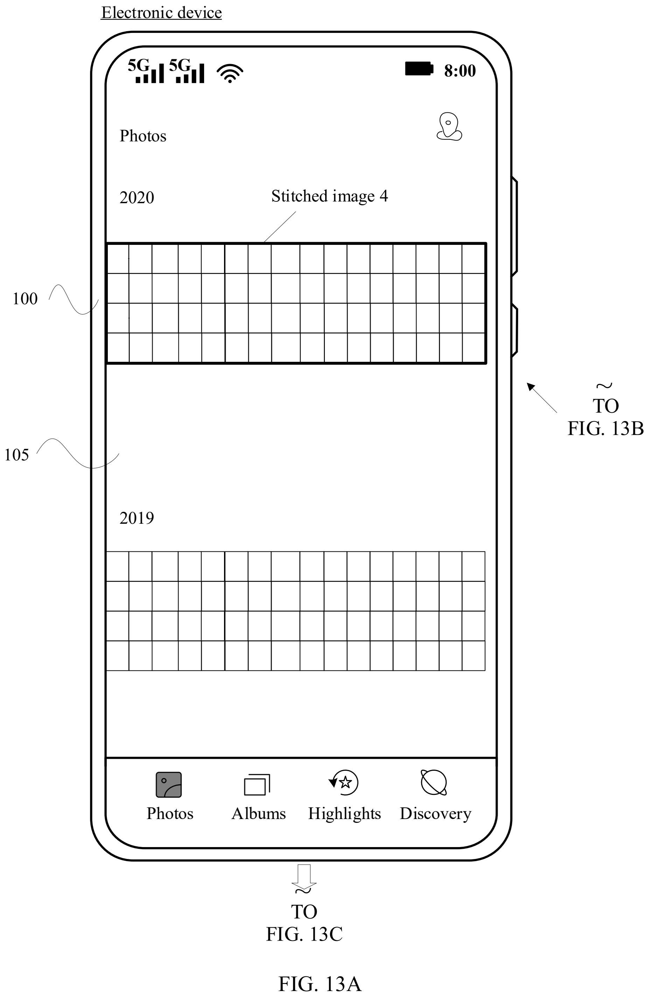

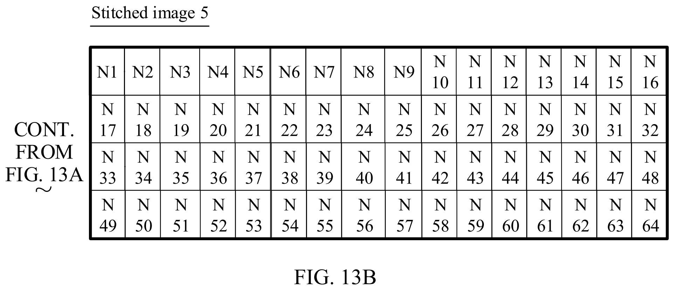

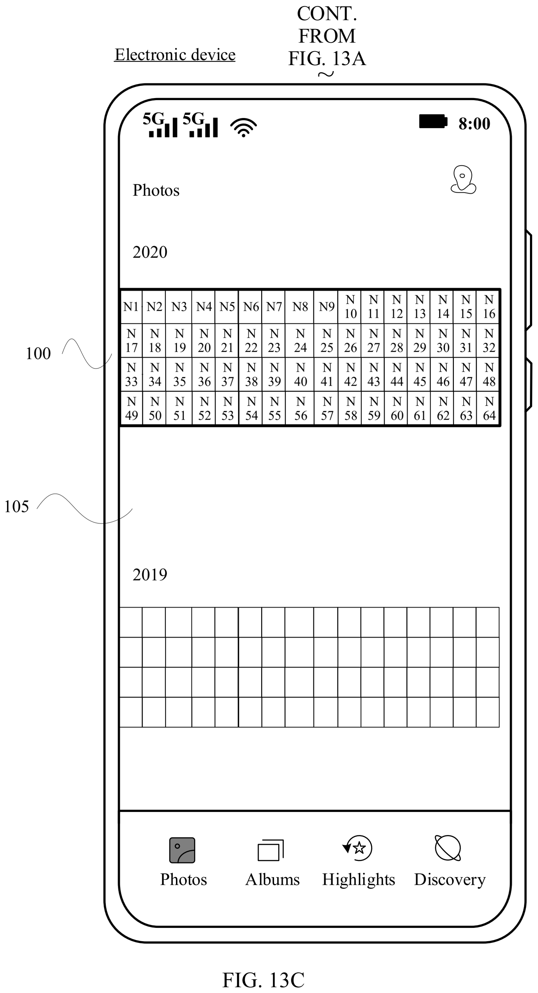

For example, as shown in FIG. 13A to FIG. 13C, the electronic device creates a stitched image 4 on an interface 105 of the gallery application, and then the electronic device moves image features of thumbnails of the stitched image 5 to the stitched image 4. Then, the electronic device transmits the stitched image 4 and an image feature of the stitched image 4 to the GPU for rendering, and displays the stitched image 4 on the display.

In this application, UI threads are further optimized, to avoid an operation of requesting a same stitched image by a same group. In addition, cropping return areas of thumbnails are not stitched into an image for rendering and display, but an area of the stitched image is directly drawn on the image for rendering and display, thereby reducing overheads of cropping and returning, and reducing load of the UI threads.

Unless otherwise stated or there is a logic conflict, terms and/or descriptions in various embodiments of this application are consistent and may be mutually referenced, and technical features in different embodiments may be combined based on an internal logical relationship thereof, to form a new embodiment.

The view display methods provided in embodiments of this application are described above in detail with reference to FIG. 1 to FIG. 13C. An electronic device provided in an embodiment of this application is described below in detail with reference to FIG. 5. It should be understood that descriptions of apparatus embodiments correspond to the descriptions of the method embodiments. Therefore, for content that is not described in detail, refer to the method embodiments. For brevity, details are not described herein again.

An embodiment of this application provides an electronic device, where the electronic device includes a receiving module, an obtaining module, and a display module.

The receiving module is configured to receive a first operation performed on a first interface, where the first operation is used to display a thumbnail of a first target picture. For example, the receiving module may perform the step S801. The receiving module may be the sensor module 260 shown in FIG. 5.

The obtaining module is configured to obtain a first group corresponding to the first target picture. The obtaining module is configured to obtain, based on the first group, a first stitched image corresponding to the first group, where the first stitched image includes image features of thumbnails of pictures that belong to the first group. The obtaining module is configured to obtain an image feature of the thumbnail of the first target picture. For example, the obtaining module may perform the steps S802 to S804. The obtaining module may be the processor 210 shown in FIG. 5.

The display module is configured to display the thumbnail of the first target picture on a second interface based on the image feature of the thumbnail of the first target picture. For example, the display module may perform the step S805. The display module may be the display 280 shown in FIG. 5.

In an embodiment, the obtaining module is configured to obtain a first location that is of the second interface and that is used to display the thumbnail of the first target picture. The display module is configured to display the thumbnail of the first target picture based on the first location and the image feature of the thumbnail of the first target picture.

In an embodiment, the electronic device further includes a grouping module and a stitching module. The grouping module is configured to group a first quantity of pictures to obtain the first group of pictures. The obtaining module is configured to obtain the thumbnails of the first group of pictures. The stitching module is configured to stitch the thumbnails of the first group of pictures to obtain the first stitched image.

In an embodiment, the grouping module is configured to group the first quantity of pictures based on a first view, where the first view includes a day view, a month view, or a year view.

In an embodiment, the first operation is used to display the thumbnail of the first target picture in a manner of the first view.

In an embodiment, the stitching module is configured to stitch the thumbnails of the first group of pictures into the first stitched image in a chronological order of the first group of pictures.

In an embodiment, the receiving module is configured to receive a specified operation, where the specified operation includes at least one of the following: a screen-off operation, a charging operation, a picture import operation, an operation of starting a gallery application, a trigger operation of displaying pictures in the gallery application in a manner of the first view for the first time, and a picture synchronization operation.

In an embodiment, the grouping module is configured to group the first quantity of pictures based on a preset periodicity, to obtain the first group of pictures.

In an embodiment, the electronic device further includes an updating module. The updating module is configured to update the first group and the first stitched image corresponding to the first group, when it is detected that a quantity of pictures changes.

In an embodiment, the updating module is configured to: update the first group when it is detected that a quantity of added pictures reaches a first threshold; or update the first group when it is detected that a quantity of deleted pictures reaches a second threshold.

In an embodiment, the electronic device further includes a determining module. The determining module is configured to determine that the electronic device stores the first stitched image corresponding to the first group.

In an embodiment, the obtaining module is configured to: determine, based on the first group to which the first target picture belongs, that the first stitched image corresponding to the first group is stored in a memory; and obtain the first stitched image corresponding to the first group.

In an embodiment, the obtaining module is configured to: determine whether a second target picture in the first group sends a request for reading the first stitched image corresponding to the first group; and if the second target picture sends the request for reading the first stitched image corresponding to the first group, obtain the first stitched image corresponding to the first group stored in a memory; or if the second target picture does not send the request for reading the first stitched image corresponding to the first group, read the first stitched image based on a group identifier of the first group, and store the first stitched image in a memory.

In an embodiment, the obtaining module is configured to: when the first stitched image corresponding to the first group is not stored in a memory, determine whether the first stitched image is being processed; and if the first stitched image is being processed, wait until the first stitched image is processed completely and obtain the first stitched image; or if the first stitched image is not being processed, read the first stitched image based on a group identifier of the first group, and store the first stitched image in the memory.

In an embodiment, the obtaining module is configured to: based on a group identifier of the first group to which the first target picture belongs and a ranking of the first target picture in the group, obtain, from the first stitched image corresponding to the group identifier, the image feature of the thumbnail corresponding to the first target picture.

In an embodiment, the display module is configured to: render the image feature of the thumbnail of the first target picture at the first location; display the thumbnail of the first target picture at the first location; and display a second stitched image in a first area of the first interface when the quantity of pictures does not change, where the second stitched image and the first stitched image are the same; display a third stitched image in a first area of the first interface when the quantity of pictures increases, where the third stitched image includes the first stitched image and a fourth stitched image, and the fourth stitched image is obtained by stitching thumbnails of the added pictures; or display a fifth stitched image in a first area of the first interface when the quantity of pictures decreases, where the fifth stitched image is distinct from the first stitched image.

In an embodiment, the first interface is an interface of a gallery application or a file management application.

In this application, during thumbnail reading and decoding, the electronic device reads and decodes thumbnails in a same group once without a need to read and decode the thumbnails separately, so that resource consumption of the electronic device is effectively reduced, and a speed of reading and decoding thumbnails on the electronic device is improved. This shortens display time required for a thumbnail, and avoids a phenomenon that a white block temporarily appears in an area in which the thumbnails are to be displayed.

It should be noted that all related content of the steps in the foregoing method embodiments may be cited in function descriptions of corresponding functional modules. Details are not described herein again.

An embodiment of this application further provides a computer-readable storage medium, including instructions. When the instructions are run on a computer, the computer is caused to perform any one of the foregoing methods.

An embodiment of this application further provides a computer program product including instructions. When the computer program product runs on a computer, the computer is caused to perform any one of the foregoing methods.

An embodiment of this application further provides a chip. The chip includes a processor and an interface circuit. The interface circuit is coupled to the processor. The processor is configured to run a computer program or instructions, to implement the foregoing method. The interface circuit is configured to communicate with another module other than the chip.

All or some of any features or any steps in embodiments of this application may be freely combined. A combined technical solution also falls within the scope of this application.

In descriptions of this application, unless otherwise specified, "/" means "or". For example, A/B may indicate A or B. "And/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Words such as "first" and "second" do not limit a quantity and an execution sequence, and the words such as "first" and "second" do not indicate a definite difference.

In descriptions of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

The foregoing descriptions about implementations allow a person skilled in the art to clearly understand that, for the purpose of convenient and brief description, division into the foregoing functional modules is used as an example for illustration. In an actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected based on actual requirements to achieve the purpose of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A view display method, wherein the method comprises:
receiving a first operation performed on a first interface, wherein the first operation is used to display a thumbnail of a first target picture;
obtaining a first group corresponding to the first target picture;
obtaining, based on the first group, a first stitched image corresponding to the first group, wherein the first stitched image comprises image features of thumbnails of pictures that belong to the first group;
obtaining an image feature of the thumbnail of the first target picture; and
displaying the thumbnail of the first target picture on a second interface based on the image feature of the thumbnail of the first target picture.

2. The method according to claim 1, wherein displaying the thumbnail of the first target picture on the second interface comprises:
obtaining a first location that is of the second interface and that is used to display the thumbnail of the first target picture; and
displaying the thumbnail of the first target picture based on the first location and the image feature of the thumbnail of the first target picture.

3. The method according to claim 1 or 2, wherein before receiving the first operation performed on the first interface, the method further comprises:
grouping a first quantity of pictures to obtain the first group of pictures;
obtaining the thumbnails of the first group of pictures; and
stitching the thumbnails of the first group of pictures to obtain the first stitched image.

4. The method according to claim 3, wherein grouping the first quantity of pictures comprises:
grouping the first quantity of pictures based on a first view, wherein the first view comprises a day view, a month view, or a year view.

5. The method according to claim 4, wherein the first operation is used to display the thumbnail of the first target picture in a manner of the first view.

6. The method according to any one of claims 3 to 5, wherein stitching the thumbnails of the first group of pictures to obtain the first stitched image comprises:
stitching the thumbnails of the first group of pictures into the first stitched image in a chronological order of the first group of pictures.

7. The method according to any one of claims 3 to 6, wherein before grouping the first quantity of pictures to obtain the first group of pictures, the method further comprises:
receiving a specified operation, wherein the specified operation comprises at least one of the following: a screen-off operation, a charging operation, a picture import operation, an operation of starting a gallery application, a trigger operation of displaying pictures in the gallery application in a manner of the first view for the first time, and a picture synchronization operation.

8. The method according to any one of claims 3 to 6, wherein grouping the first quantity of pictures to obtain the first group of pictures comprises:
grouping the first quantity of pictures based on a preset periodicity, to obtain the first group of pictures.

9. The method according to any one of claims 1 to 8, further comprising:
updating the first group and the first stitched image corresponding to the first group, when it is detected that a quantity of pictures changes.

10. The method according to claim 9, wherein updating the first group when it is detected that the quantity of pictures changes comprises:
updating the first group when it is detected that a quantity of added pictures reaches a first threshold; or updating the first group when it is detected that a quantity of deleted pictures reaches a second threshold.

11. The method according to any one of claims 1 to 10, wherein before obtaining, based on the first group, the first stitched image corresponding to the first group, the method further comprises:
determining that the electronic device stores the first stitched image corresponding to the first group.

12. The method according to any one of claims 1 to 11, wherein obtaining, based on the first group, the first stitched image corresponding to the first group comprises:
determining, based on the first group to which the first target picture belongs, that the first stitched image corresponding to the first group is stored in a memory; and
obtaining the first stitched image corresponding to the first group.

13. The method according to any one of claims 1 to 11, wherein obtaining, based on the first group, the first stitched image corresponding to the first group comprises:
determining whether a second target picture in the first group sends a request for reading the first stitched image corresponding to the first group, wherein the second target picture is any picture in the first group; and
if the second target picture sends the request for reading the first stitched image corresponding to the first group, obtaining the first stitched image corresponding to the first group stored in a memory; or
if the second target picture does not send the request for reading the first stitched image corresponding to the first group, reading the first stitched image based on a group identifier of the first group, and storing the first stitched image in a memory.

14. The method according to any one of claims 1 to 11, wherein obtaining, based on the first group, the first stitched image corresponding to the first group comprises:
when the first stitched image corresponding to the first group is not stored in a memory, determining whether the first stitched image is being processed; and
if the first stitched image is being processed, waiting until the first stitched image is processed completely and obtaining the first stitched image; or
if the first stitched image is not being processed, reading the first stitched image based on a group identifier of the first group, and storing the first stitched image in the memory.

15. The method according to any one of claims 1 to 11, wherein obtaining, based on the first group, the first stitched image corresponding to the first group comprises:
based on a group identifier of the first group to which the first target picture belongs and a ranking of the first target picture in the group, obtaining, from the first stitched image corresponding to the group identifier, the image feature of the thumbnail corresponding to the first target picture.

16. The method according to any one of claims 2 to 15, wherein displaying the thumbnail of the first target picture based on the first location and the image feature of the thumbnail of the first target picture comprises:
rendering the image feature of the thumbnail of the first target picture at the first location; and
displaying the thumbnail of the first target picture at the first location.

17. The method according to any one of claims 2 to 15, wherein the method comprises: displaying a second stitched image in a first area of the first interface when the quantity of pictures does not change, wherein the second stitched image and the first stitched image are the same;
displaying a third stitched image in a first area of the first interface when the quantity of pictures increases, wherein the third stitched image comprises image features of some or all thumbnails in the first stitched image and image features of some or all thumbnails in a fourth stitched image, and the fourth stitched image is obtained by stitching thumbnails of the added pictures; or
displaying a fifth stitched image in a first area of the first interface when the quantity of pictures decreases, wherein the fifth stitched image is distinct from the first stitched image.

18. The method according to any one of claims 1 to 16, wherein the first interface is an interface of the gallery application or a file management application.

19. An electronic device, wherein the electronic device comprises a receiving module, an obtaining module, and a display module;
the receiving module is configured to receive a first operation performed on a first interface, wherein the first operation is used to display a thumbnail of a first target picture;
the obtaining module is configured to obtain a first group corresponding to the first target picture;
the obtaining module is configured to obtain, based on the first group, a first stitched image corresponding to the first group, wherein the first stitched image comprises image features of thumbnails of pictures that belong to the first group;
the obtaining module is configured to obtain an image feature of the thumbnail of the first target picture; and
the display module is configured to display the thumbnail of the first target picture on a second interface based on the image feature of the thumbnail of the first target picture.

20. The electronic device according to claim 19, wherein
the obtaining module is configured to obtain a first location that is of the second interface and that is used to display the thumbnail of the first target picture; and
the display module is configured to display the thumbnail of the first target picture based on the first location and the image feature of the thumbnail of the first target picture.

21. The electronic device according to claim 19 or 20, further comprising a grouping module and a stitching module, wherein
the grouping module is configured to group a first quantity of pictures to obtain the first group of pictures;
the obtaining module is configured to obtain the thumbnails of the first group of pictures; and
the stitching module is configured to stitch the thumbnails of the first group of pictures to obtain the first stitched image.

22. The electronic device according to claim 21, wherein the grouping module is configured to:
group the first quantity of pictures based on a first view, wherein the first view comprises a day view, a month view, or a year view.

23. The electronic device according to claim 22, wherein the first operation is used to display the thumbnail of the first target picture in a manner of the first view.

24. The electronic device according to any one of claims 21 to 23, wherein the stitching module is configured to:
stitch the thumbnails of the first group of pictures into the first stitched image in a chronological order of the first group of pictures.

25. The electronic device according to any one of claims 21 to 24, wherein the receiving module is configured to:
receive a specified operation, wherein the specified operation comprises at least one of the following: a screen-off operation, a charging operation, a picture import operation, an operation of starting a gallery application, a trigger operation of displaying pictures in the gallery application in a manner of the first view for the first time, and a picture synchronization operation.

26. The electronic device according to any one of claims 21 to 24, wherein the grouping module is configured to:
group the first quantity of pictures based on a preset periodicity, to obtain the first group of pictures.

27. The electronic device according to any one of claims 19 to 26, further comprising an updating module, wherein
the updating module is configured to update the first group and the first stitched image corresponding to the first group, when it is detected that a quantity of pictures changes.

28. The electronic device according to claim 27, wherein the updating module is configured to:
update the first group when it is detected that a quantity of added pictures reaches a first threshold; or update the first group when it is detected that a quantity of deleted pictures reaches a second threshold.

29. The electronic device according to any one of claims 19 to 28, further comprising a determining module, wherein
the determining module is configured to determine that the electronic device stores the first stitched image corresponding to the first group.

30. The electronic device according to any one of claims 19 to 29, wherein the obtaining module is configured to:
determine, based on the first group to which the first target picture belongs, that the first stitched image corresponding to the first group is stored in a memory; and
obtain the first stitched image corresponding to the first group.

31. The electronic device according to any one of claims 19 to 29, wherein the obtaining module is configured to:
determine whether a second target picture in the first group sends a request for reading the first stitched image corresponding to the first group, wherein the second target picture is any picture in the first group; and
if the second target picture sends the request for reading the first stitched image corresponding to the first group, obtain the first stitched image corresponding to the first group stored in a memory; or
if the second target picture does not send the request for reading the first stitched image corresponding to the first group, read the first stitched image based on a group identifier of the first group, and store the first stitched image in a memory.

32. The electronic device according to any one of claims 19 to 29, wherein the obtaining module is configured to:
when the first stitched image corresponding to the first group is not stored in a memory, determine whether the first stitched image is being processed; and
if the first stitched image is being processed, wait until the first stitched image is processed completely and obtain the first stitched image; or
if the first stitched image is not being processed, read the first stitched image based on a group identifier of the first group, and store the first stitched image in the memory.

33. The electronic device according to any one of claims 19 to 29, wherein the obtaining module is configured to:
based on a group identifier of the first group to which the first target picture belongs and a ranking of the first target picture in the group, obtain, from the first stitched image corresponding to the group identifier, the image feature of the thumbnail corresponding to the first target picture.

34. The electronic device according to any one of claims 20 to 33, wherein the display module is configured to:
render the image feature of the thumbnail of the first target picture at the first location;
display the thumbnail of the first target picture at the first location; and
display a second stitched image in a first area of the first interface when the quantity of pictures does not change, wherein the second stitched image and the first stitched image are the same.

35. The electronic device according to any one of claims 20 to 33, wherein the display module is configured to:
display a third stitched image in a first area of the first interface when the quantity of pictures increases, wherein the third stitched image comprises image features of some or all thumbnails in the first stitched image and image features of some or all thumbnails in a fourth stitched image, and the fourth stitched image is obtained by stitching thumbnails of the added pictures; or
display a fifth stitched image in a first area of the first interface when the quantity of pictures decreases, wherein the fifth stitched image is distinct from the first stitched image.

36. The electronic device according to any one of claims 19 to 35, wherein the first interface is an interface of the gallery application or a file management application.

37. An electronic device, wherein the electronic device comprises one or more processors and a storage, the storage stores code, and when the code is executed by the processor, the electronic device is caused to perform the method according to any one of claims 1 to 18.

38. A computer-readable storage medium, comprising computer instructions, wherein when the computer instructions are run on an electronic device, the electronic device is caused to perform the method according to any one of claims 1 to 18.
